# EUROPEAN PATENT APPLICATION

(11) **EP 4 531 460 A1**
(43) Date of publication of application: **02.04.2025**
(21) Application number: 24202842.1
(22) Date of filing: 26.09.2024
(51) Int. Cl.: H04W 36/22, H04W 48/06, H04W 24/02, H04W 84/12, H04W 76/14, H04W 76/15

(54) **DETAILED BASIC SERVICE SET LOAD INFORMATION**

(30) Priority: 27.09.2023 US 202363585672 P; 24.09.2024 US 202418894230
(71) Applicant: Apple Inc., Cupertino, CA 95014 (US)
(72) Inventor: KNECKT, Jarkko L., Cupertino, 95014 (US); VERMA, Lochan, Cupertino, 95014 (US); LIU, Yong, Cupertino, 95014 (US); BOODANNAVAR, Veerendra, Cupertino, 95014 (US); DOMINGUEZ, Charles F., Cupertino, 95014 (US); DASH, Debashis, Cupertino, 95014 (US); KRISHNAN, Neelakantan Nurani, Cupertino, 95014 (US)
(74) Representative: Zacco Denmark A/S

(57) **Abstract**

This disclosure relates to methods for providing detailed basic service set load information in a wireless local area network. A wireless device may receive basic service set load information including one or more of overlapping basic service set channel utilization information, in basic service set channel utilization information for a basic service set, or load history information for the basic service set. The wireless device may select a basic service set with which to associate based at least in part on the load information for the basic service set.

## Description

### TECHNICAL FIELD

The present application relates to wireless communication, including techniques and devices for providing detailed basic service set load information in a wireless local area network architecture.

### DESCRIPTION OF THE RELATED ART

Wireless communication systems are ubiquitous. Further, wireless communication technology has evolved from voice-only communications to also include the transmission of data, such as Internet and multimedia content.

Mobile electronic devices, or stations (STAs) or user equipment devices (UEs), may take the form of smart phones or tablets that a user typically carries. One aspect of wireless communication that may commonly be performed by mobile devices may include wireless networking, for example over a wireless local area network (WLAN), which may include devices that operate according to one or more communication standards in the IEEE 802.11 family of standards. In a wireless local area network, it may take a certain amount of time for a wireless device to find a suitable wireless network to join. This can potentially cause performance degradation for traffic for which low latency is important, at least in some instances. Accordingly, improvements in the field are desired.

### SUMMARY

Embodiments are presented herein of, *inter alia*, systems, apparatuses, and methods for devices to provide detailed basic service set load information in a wireless local area network architecture.

A wireless device may include one or more antennas, one or more radios operably coupled to the one or more antennas, and a processor operably coupled to the one or more radios. The wireless device may be configured to establish a connection with an access point through a wireless local area network (WLAN) over one or multiple wireless links, or may be an access point configured to establish a connection with one or more other wireless devices through a WLAN over one or multiple wireless links. The wireless device may operate in each of the multiple wireless links using a respective radio of the one or more radios.

An access point wireless device may provide basic service set load information for one or more basic service sets, which could include those operated by the access point wireless device and/or those operated by other access point wireless devices. The basic service set load information may include information regarding specific components of channel utilization for the basic service set, such as overlapping basic service set utilization, total in basic service set utilization, and possibly one or more even more specific aspects of in basic service set utilization. The basic service set load information may additionally or alternatively include load history information for the basic service set(s), such as certain percentile values for various load aspects over an averaging window from a load history histogram that includes multiple load samples. Further possible information that may be provided in the basic service set load information could include power save operation information, cooperative basic service set utilization information, and/or transmit opportunity duration distribution information, among various other possibilities.

The basic service set load information may be used by a non-access point wireless device for initial basic service set selection and/or for roaming basic service set selection. Since the load information may include information for multiple basic service sets, it may be possible that the total scanning time by the non-access point wireless device to perform access point and link selection may be reduced. Additionally, or alternatively, since the load information may include various detailed aspects of current and/or historical channel utilization, it may be possible that access point and link selection using such basic service set load information may be more precise in relation to the specific circumstances of the non- access point wireless device, at least according to some embodiments.

The techniques described herein may be implemented in and/or used with a number of different types of devices, including but not limited to cellular phones, tablet computers, accessory and/or wearable computing devices, portable media players, base stations and other network infrastructure equipment, servers, unmanned aerial vehicles, unmanned aerial controllers, automobiles and/or motorized vehicles, and any of various other computing devices.

This summary is intended to provide a brief overview of some of the subject matter described in this document. Accordingly, it will be appreciated that the above-described features are merely examples and should not be construed to narrow the scope or spirit of the subject matter described herein in any way. Other features, aspects, and advantages of the subject matter described herein will become apparent from the following Detailed Description, Figures, and Claims.

### BRIEF DESCRIPTION OF THE DRAWINGS

A better understanding of the present subject matter can be obtained when the following detailed description of the embodiments is considered in conjunction with the following drawings.
Figure 1 illustrates an example wireless communication system including a wireless device, according to some embodiments;
Figure 2 is a block diagram illustrating an example wireless device, according to some embodiments;
Figure 3 is a block diagram illustrating an example network element or access point, according to some embodiments;
Figure 4 is a flowchart diagram illustrating an example method for providing detailed basic service set load information in a wireless local area network, according to some embodiments;
Figure 5 illustrates example aspects of possible timelines for the total delay of data transmission for single-link and multi-link operation, according to some embodiments;
Figure 6 is a signal flow diagram illustrating a possible example AP MLD scanning process, according to some embodiments;
Figure 7 illustrates example aspects of a possible communication timeline for a channel on which both OBSS traffic and In-BSS traffic are communicated, according to some embodiments;
Figure 8 illustrates one possible BSS load element, according to some embodiments;
Figure 9 illustrates various possible components of channel utilization for a channel used by a BSS, according to some embodiments;
Figure 10 illustrates a possible communication timeline including a variety of possible in-BSS transmission modes, according to some embodiments;
Figure 11 illustrates an example timeline in which only the latest BSS load information is provided in beacons frames, according to some embodiments;
Figure 12 illustrates an example timeline in which load history information is provided in beacons frames in addition to the latest BSS load information, according to some embodiments;
Figures 13-16 illustrate example details of a possible UHR load element and various possible fields of such a UHR load element, according to some embodiments;
Figure 17 illustrates aspects of one example of possible UHR AP beacon content including performance information signaling, according to some embodiments;
Figure 18 illustrates aspects of a possible example set of UHR AP load characteristics for links of an AP MLD, and an example of a potential corresponding UHR STA operation profile for the links, according to some embodiments;
Figure 19 is a signal flow diagram illustrating another possible example AP MLD scanning process, in which more detailed UHR load information can be provided, according to some embodiments;
Figure 20 illustrates possible components of AP time usage corresponding to a channel used by a BSS for an example scenario in which the AP operates in a power save state for a portion of the time, according to some embodiments;
Figures 21-23 illustrate example scenarios with AP power save, according to some embodiments;
Figure 24 illustrates example aspects of a coordinated time division multiple access scheme to share use of a channel between multiple APs, according to some embodiments;
Figure 25 illustrates possible components of AP time usage including cooperative BSS channel utilization among the other components of AP time usage, according to some embodiments;
Figure 26 is a table illustrating aspects of an example In-BSS load field that includes an indication of cooperative BSS utilization, according to some embodiments;
Figure 27 illustrates example aspects of scenarios in which "normal" preamble detection occurs, and in which OBSS preamble detection is missed due to overlap with AP transmission, according to some embodiments;
Figure 28 illustrates an example timeline portion for two different BSSs that have the same channel utilization with different distributions of TXOP durations, according to some embodiments;
Figure 29 illustrates the differing distributions of TXOP durations for the example BSSs of Figure 28 in a line graph; and
Figure 30 illustrates example aspects of a possible TXOP duration distribution element, according to some embodiments.

While the features described herein are susceptible to various modifications and alternative forms, specific embodiments thereof are shown by way of example in the drawings and are herein described in detail. It should be understood, however, that the drawings and detailed description thereto are not intended to be limiting to the particular form disclosed, but on the contrary, the intention is to cover all modifications, equivalents and alternatives falling within the spirit and scope of the subject matter as defined by the appended claims.

### DETAILED DESCRIPTION

### Terminology

The following are definitions of terms used in this disclosure:

**Memory Medium -** Any of various types of non-transitory memory devices or storage devices. The term "memory medium" is intended to include any computer system memory or random access memory such as DRAM, DDR RAM, SRAM, EDO RAM, Rambus RAM, etc.; a non-volatile memory such as a Flash, magnetic media, e.g., a hard drive, or optical storage; registers, or other similar types of memory elements, etc. The term "memory medium" may include two or more memory mediums which may reside in different locations, e.g., in different computer systems that are connected over a network. The memory medium may store program instructions (e.g., embodied as computer programs) that may be executed by one or more processors.

**Carrier Medium** - a memory medium as described above, as well as a physical transmission medium, such as a bus, network, and/or other physical transmission medium that conveys signals such as electrical, electromagnetic, or digital signals.

**Computer System** - any of various types of computing or processing systems, including a personal computer system (PC), server-based computer system, wearable computer, network appliance, Internet appliance, smartphone, television system, grid computing system, or other device or combinations of devices. In general, the term "computer system" can be broadly defined to encompass any device (or combination of devices) having at least one processor that executes instructions from a memory medium.

**User Equipment (UE) (or "UE Device")** - any of various types of computer systems or devices that are mobile or portable and that perform wireless communications. Examples of UE devices include mobile telephones or smart phones (e.g., iPhone^{™}, Android^{™}-based phones), portable gaming devices, laptops, wearable devices (e.g., smart watch, smart glasses), portable Internet devices, music players, data storage devices, or other handheld devices, automobiles and/or motor vehicles, unmanned aerial vehicles (UAVs) (e.g., drones), UAV controllers (UACs), etc. In general, the term "UE" or "UE device" can be broadly defined to encompass any electronic, computing, and/or telecommunications device (or combination of devices) which is easily transported by a user and capable of wireless communication.

**Wireless Device or Station (STA)** - any of various types of computer systems or devices that perform wireless communications. A wireless device can be portable (or mobile) or may be stationary or fixed at a certain location. The terms "station" and "STA" are used similarly. A UE is an example of a wireless device.

**Communication Device** - any of various types of computer systems or devices that perform communications, where the communications can be wired or wireless. A communication device can be portable (or mobile) or may be stationary or fixed at a certain location. A wireless device is an example of a communication device. A UE is another example of a communication device.

**Base Station or Access Point (AP)** - The term "Base Station" (also called "eNB" or "gNB") has the full breadth of its ordinary meaning, and at least includes a wireless communication station installed at a fixed location and used to communicate as part of a wireless communication system. The term "access point" (or "AP") is typically associated with Wi-Fi based communications and is used similarly.

**Processing Element (or Processor)** - refers to various elements or combinations of elements that are capable of performing a function in a device, e.g., in a communication device or in a network infrastructure device. Processors may include, for example: processors and associated memory, circuits such as an ASIC (Application Specific Integrated Circuit), portions or circuits of individual processor cores, entire processor cores, processor arrays, programmable hardware devices such as a field programmable gate array (FPGA), and/or larger portions of systems that include multiple processors, as well any of various combinations of the above.

**Automatically** - refers to an action or operation performed by a computer system (e.g., software executed by the computer system) or device (e.g., circuitry, programmable hardware elements, ASICs, etc.), without user input directly specifying or performing the action or operation. Thus, the term "automatically" is in contrast to an operation being manually performed or specified by the user, where the user provides input to directly perform the operation. An automatic procedure may be initiated by input provided by the user, but the subsequent actions that are performed "automatically" are not specified by the user, i.e., are not performed "manually", where the user specifies each action to perform. For example, a user filling out an electronic form by selecting each field and providing input specifying information (e.g., by typing information, selecting check boxes, radio selections, etc.) is filling out the form manually, even though the computer system must update the form in response to the user actions. The form may be automatically filled out by the computer system where the computer system (e.g., software executing on the computer system) analyzes the fields of the form and fills in the form without any user input specifying the answers to the fields. As indicated above, the user may invoke the automatic filling of the form, but is not involved in the actual filling of the form (e.g., the user is not manually specifying answers to fields but rather they are being automatically completed). The present specification provides various examples of operations being automatically performed in response to actions the user has taken.

**IEEE 802.11** - refers to technology based on IEEE 802.11 wireless standards such as 802.11a, 802.11.b, 802.11g, 802.11n, 802.11-2012, 802.11ac, 802.11ad, 802.11ax, 802.11 ay, 802.11 be, and/or other IEEE 802.11 standards. IEEE 802.11 technology may also be referred to as "Wi-Fi" or "wireless local area network (WLAN)" technology.

**Configured to** - Various components may be described as "configured to" perform a task or tasks. In such contexts, "configured to" is a broad recitation generally meaning "having structure that" performs the task or tasks during operation. As such, the component can be configured to perform the task even when the component is not currently performing that task (e.g., a set of electrical conductors may be configured to electrically connect a module to another module, even when the two modules are not connected). In some contexts, "configured to" may be a broad recitation of structure generally meaning "having circuitry that" performs the task or tasks during operation. As such, the component can be configured to perform the task even when the component is not currently on. In general, the circuitry that forms the structure corresponding to "configured to" may include hardware circuits.

Various components may be described as performing a task or tasks, for convenience in the description. Such descriptions should be interpreted as including the phrase "configured to." Reciting a component that is configured to perform one or more tasks is expressly intended not to invoke 35 U.S.C. § 112, paragraph six, interpretation for that component.

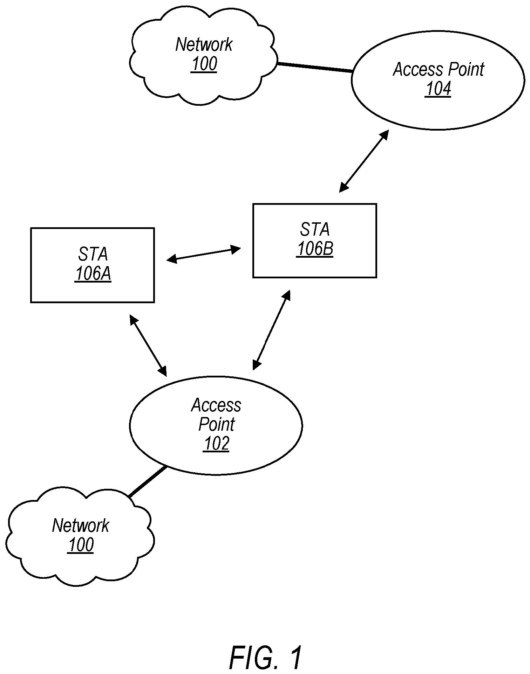

### Figures 1-2 - Wireless Communication System

Figure 1 illustrates an example of a wireless communication system. It is noted that Figure 1 represents one possibility among many, and that features of the present disclosure may be implemented in any of various systems, as desired. For example, embodiments described herein may be implemented in any type of wireless device. The wireless embodiment described below is one example embodiment.

As shown, the exemplary wireless communication system includes an access point (AP) 102, which communicates over a transmission medium with one or more wireless devices 106A, 106B, etc. Wireless devices 106A and 106B may be user devices, such as stations (STAs), non-AP STAs, or WLAN devices.

The STA 106 may be a device with wireless network connectivity such as a mobile phone, a hand-held device, a wearable device, a computer or a tablet, an unmanned aerial vehicle (UAV), an unmanned aerial controller (UAC), an automobile, or virtually any type of wireless device. The STA 106 may include a processor (processing element) that is configured to execute program instructions stored in memory. The STA 106 may perform any of the method embodiments described herein by executing such stored instructions. Alternatively, or in addition, the STA 106 may include a programmable hardware element such as an FPGA (field-programmable gate array), an integrated circuit, and/or any of various other possible hardware components that are configured to perform (e.g., individually or in combination) any of the method embodiments described herein, or any portion of any of the method embodiments described herein.

The AP 102 may be a stand-alone AP or an enterprise AP, and may include hardware that enables wireless communication with the STA devices 106A and 106B. The AP 102 may also be equipped to communicate with a network 100 (e.g., a WLAN, an enterprise network, and/or another communication network connected to the Internet, among various possibilities). Thus, the AP 102 may facilitate communication among the STA devices 106 and/or between the STA devices 106 and the network 100. In other implementations, AP 102 can be configured to provide communications over one or more wireless technologies, such as any, any combination of, or all of 802.11 a, b, g, n, ac, ad, ax, ay, be and/or other 802.11 versions, or a cellular protocol, such as 5G or LTE, including in an unlicensed band (e.g., LAA, NR-U).

The communication area (or coverage area) of the AP 102 may be referred to as a basic service area (BSA) or cell. The AP 102 and the STAs 106 may be configured to communicate over the transmission medium using any of various radio access technologies (RATs) or wireless communication technologies, such as Wi-Fi, LTE, LTE-Advanced (LTE-A), 5G NR, ultra-wideband (UWB), etc.

AP 102 and other similar access points (not shown) operating according to one or more wireless communication technologies may thus be provided as a network, which may provide continuous or nearly continuous overlapping service to STA devices 106A-B and similar devices over a geographic area, e.g., via one or more communication technologies. A STA may roam from one AP to another directly, or may transition between APs and cellular network cells.

Note that at least in some instances a STA device 106 may be capable of communicating using any of multiple wireless communication technologies. For example, a STA device 106 might be configured to communicate using one or more of Wi-Fi, LTE, LTE-A, 5GNR, Bluetooth, UWB, one or more satellite systems, etc. Other combinations of wireless communication technologies (including more than two wireless communication technologies) are also possible. Likewise, in some instances a STA device 106 may be configured to communicate using only a single wireless communication technology.

As shown, the exemplary wireless communication system also can include an access point (AP) 104, which communicates over a transmission medium with the wireless device 106B. The AP 104 also provides communicative connectivity to the network 100. Thus, according to some embodiments, wireless devices may be able to connect to either or both of the AP 102 (or a cellular base station) and the access point 104 (or another access point) to access the network 100. For example, a STA may roam from AP 102 to AP 104 based on one or more factors, such as coverage, interference, and capabilities. Note that it may also be possible for the AP 104 to provide access to a different network (e.g., an enterprise Wi-Fi network, a home Wi-Fi network, etc.) than the network to which the AP 102 provides access.

The STAs 106A and 106B may include handheld devices such as smart phones or tablets, wearable devices such as smart watches or smart glasses, and/or may include any of various types of devices with cellular communications capability. For example, one or more of the STAs 106A and/or 106B may be a wireless device intended for stationary or nomadic deployment such as an appliance, measurement device, control device, etc.

The STA 106B may also be configured to communicate with the STA 106A. For example, the STA 106A and STA 106B may be capable of performing direct device-to-device (D2D) communication. In some embodiments, such direct communication between STAs may also or alternatively be referred to as peer-to-peer (P2P) communication. The direct communication may be supported by the AP 102 (e.g., the AP 102 may facilitate discovery, among various possible forms of assistance), or may be performed in a manner unsupported by the AP 102. Such P2P communication may be performed using 3GPP-based D2D communication techniques, Wi-Fi-based P2P communication techniques, UWB, BT, and/or any of various other direct communication techniques, according to various embodiments.

The STA 106 may include one or more devices or integrated circuits for facilitating wireless communication, potentially including a Wi-Fi modem, cellular modem and/or one or more other wireless modems. The wireless modem(s) may include one or more processors (processor elements) and various hardware components as described herein. The STA 106 may perform any of (or any portion of) the method embodiments described herein by executing instructions on one or more programmable processors. For example, the STA may be configured to perform techniques for providing and/or receiving detailed basic service set information in a wireless communication system, such as according to the various embodiments described herein. Alternatively, or in addition, the one or more processors may be one or more programmable hardware elements such as an FPGA (field-programmable gate array), application-specific integrated circuit (ASIC), or other circuitry, that is configured to perform any of the method embodiments described herein, or any portion of any of the method embodiments described herein. The wireless modem(s) described herein may be used in a STA device as defined herein, a wireless device as defined herein, or a communication device as defined herein. The wireless modem described herein may also be used in an AP, a base station, a pico cell, a femto cell, or other similar network side device.

The STA 106 may include one or more antennas for communicating using two or more wireless communication protocols or radio access technologies. In some embodiments, the STA 106 can be configured to communicate using a single shared radio. The shared radio may couple to a single antenna, or may couple to multiple antennas (e.g., for MIMO) for performing wireless communications. Alternatively, the STA 106 may include two or more radios, each of which may be configured to communicate via a respective wireless link. Other configurations are also possible.

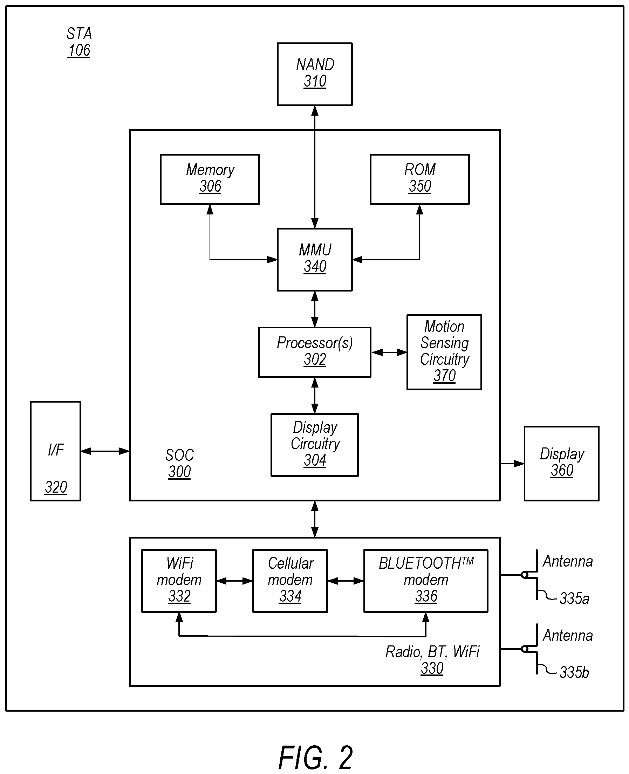

### Figure 2 - Example Block Diagram of a STA Device

Figure 2 illustrates one possible block diagram of a STA device, such as STA device 106. In some instances, the STA 106 may alternatively be referred to as a UE 106. STA 106 also may be referred to as a non-AP STA 106. As shown, the STA 106 may include a system on chip (SOC) 300, which may include one or more portions configured for various purposes. Some or all of the various illustrated components (and/or other device components not illustrated, e.g., in variations and alternative arrangements) may be "communicatively coupled" or "operatively coupled," which terms may be taken herein to mean components that can communicate, directly or indirectly, when the device is in operation.

As shown, the SOC 300 may include processor(s) 302 which may execute program instructions for the STA 106, and display circuitry 304 which may perform graphics processing and provide display signals to the display 360. The SOC 300 may also include motion sensing circuitry 370 which may detect motion of the STA 106, for example using a gyroscope, accelerometer, and/or any of various other motion sensing components. The processor(s) 302 may also be coupled to memory management unit (MMU) 340, which may be configured to receive addresses from the processor(s) 302 and translate those addresses to locations in memory (e.g., memory 306, read only memory (ROM) 350, flash memory 310). The MMU 340 may be configured to perform memory protection and page table translation or set up. In some embodiments, the MMU 340 may be included as a portion of the processor(s) 302.

As shown, the SOC 300 may be coupled to various other circuits of the STA 106. For example, the STA 106 may include various types of memory (e.g., including NAND flash 310), a connector interface 320 (e.g., for coupling to a computer system, dock, charging station, etc.), the display 360, and wireless communication circuitry 330 (e.g., for LTE, LTE-A, 5GNR, Bluetooth, Wi-Fi, NFC, GPS, UWB, etc.).

The STA 106 may include at least one antenna, and in some embodiments multiple antennas 335a and 335b, for performing wireless communication with base stations and/or other devices. For example, the STA 106 may use antennas 335a and 335b to perform the wireless communication. As noted above, the STA 106 may in some embodiments be configured to communicate wirelessly using a plurality of wireless communication standards or radio access technologies (RATs).

The wireless communication circuitry 330 may include a Wi-Fi modem 332, a cellular modem 334, and a Bluetooth mogic 336. The Wi-Fi modem 332 is for enabling the STA 106 to perform Wi-Fi or other WLAN communications, e.g., on an 802.11 network. The Bluetooth modem 336 is for enabling the STA 106 to perform Bluetooth communications. The cellular modem 334 may be a cellular modem capable of performing cellular communication according to one or more cellular communication technologies, e.g., in accordance with one or more 3GPP specifications.

As described herein, STA 106 may include hardware and software components for implementing embodiments of this disclosure. For example, one or more components of the wireless communication circuitry 330 (e.g., Wi-Fi modem 332, cellular modem 334, BT modem 336) of the STA 106 may be configured to implement part or all of the methods for providing detailed basic service set load information described herein, e.g., by a processor executing program instructions stored on a memory medium (e.g., a non-transitory computer-readable memory medium), a processor configured as an FPGA (Field Programmable Gate Array), and/or using dedicated hardware components, which may include an ASIC (Application Specific Integrated Circuit).

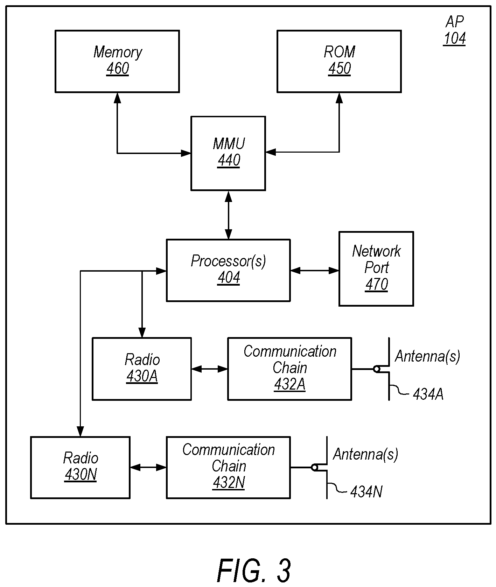

### Figure 3 - Block Diagram of an Access Point

Figure 3 illustrates an example block diagram of an access point (AP) 104, according to some embodiments. In some instances (e.g., in an 802.11 communication context), the AP 104 may also be referred to as a station (STA), and possibly more particularly as an AP STA. It is noted that the AP of Figure 3 is merely one example of a possible access point. As shown, AP 104 may include processor(s) 404 which may execute program instructions for the AP 104. The processor(s) 404 may also be coupled to memory management unit (MMU) 440, which may be configured to receive addresses from the processor(s) 404 and translate those addresses to locations in memory (e.g., memory 460 and read only memory (ROM) 450) or to other circuits or devices.

The AP 104 may include at least one network port 470. The network port 470 may be configured to couple to a telephone network and provide a plurality of devices, such as STA devices 106, with access to the telephone network as described above in Figure 1.

The network port 470 (or an additional network port) may also or alternatively be configured to couple to a cellular network, e.g., a core network of a cellular service provider. The core network may provide mobility related services and/or other services to a plurality of devices, such as UE devices 106. In some cases, the network port 470 may couple to a telephone network via the core network, and/or the core network may provide a telephone network (e.g., among other UE devices serviced by the cellular service provider).

The AP 104 may include one or more radios 430A-430N, each of which may be coupled to a respective communication chain and at least one antenna 434, and possibly multiple antennas. The antenna(s) 434 may be configured to operate as a wireless transceiver and may be further configured to communicate with UE devices 106 via radio 430. The antenna(s) 434A-N communicate with their respective radios 430A-N via communication chains 432A-N. Communication chains 432 may be receive chains, transmit chains, or both. The radios 430A-N may be configured to communicate in accordance with various wireless communication standards, including, but not limited to, LTE, LTE-A, 5G NR, UWB, Wi-Fi, BT, etc. The AP 104 may be configured to operate on multiple wireless links using the one or more radios 430A-N, wherein each radio is used to operate on a respective wireless link.

The AP 104 may be configured to communicate wirelessly using multiple wireless communication standards. In some instances, the AP 104 may include multiple radios, which may enable the network entity to communicate according to multiple wireless communication technologies. For example, as one possibility, the AP 104 may include a 4G or 5G radio for performing communication according to a 3GPP wireless communication technology as well as a Wi-Fi radio for performing communication according to Wi-Fi. In such a case, the AP 104 may be capable of operating as both a cellular base station and a Wi-Fi access point. As another possibility, the AP 104 may include a multi-mode radio which is capable of performing communications according to any of multiple wireless communication technologies (e.g., 5G NR and Wi-Fi, 5G NR and LTE, etc.). As still another possibility, the AP 104 may be configured to act exclusively as a Wi-Fi access point, e.g., without cellular communication capability.

As described further herein, the AP 104 may include hardware and software components for implementing or supporting implementation of features described herein, such as providing detailed basic service set load information. The processor 404 of the AP 104 may be configured to implement or support implementation of part or all of the methods described herein, e.g., by executing program instructions stored on a memory medium (e.g., a non-transitory computer-readable memory medium) to operate multiple wireless links using multiple respective radios. Alternatively, the processor 404 may be configured as a programmable hardware element, such as an FPGA (Field Programmable Gate Array), or as an ASIC (Application Specific Integrated Circuit), or a combination thereof. Alternatively (or in addition) the processor 404 of the AP 104, in conjunction with one or more of the other components 430, 432, 434, 440, 450, 460, 470 may be configured to implement or support implementation of part or all of the features described herein.

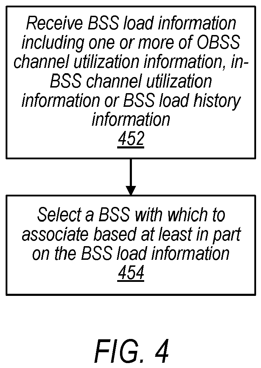

### Figure 4 - Flowchart

Figure 4 is a flowchart diagram illustrating a method for supporting fast multi-link scanning in a WLAN setting, according to some embodiments. In various embodiments, some of the elements of the methods shown may be performed concurrently, in a different order than shown, may be substituted for by other method elements, or may be omitted. Additional method elements may also be performed as desired.

Aspects of the method of Figure 4 may be implemented by a wireless device, such as the AP 104 or STA 106 illustrated in and described with respect to Figures 1-3, or more generally in conjunction with any of the computer circuitry, systems, devices, elements, or components shown in the Figures, among others, as desired. For example, a processor (and/or other hardware) of such a device may be configured to cause the device to perform any combination of the illustrated method elements and/or other method elements.

Note that while at least some elements of the method of Figure 4 are described in a manner relating to the use of communication techniques and/or features associated with IEEE 802.11 specification documents, such description is not intended to be limiting to the disclosure, and aspects of the method of Figure 4 may be used in any suitable wireless communication system, as desired. As shown, the method may operate as follows.

An access point (AP) wireless device may provide one or more basic service sets (BSSs). In some embodiments, the AP wireless device may be an AP multi-link device (MLD), which may be capable of providing a BSS on each of multiple links, such as on a 2.4 GHz link, a 5 GHz link, and/or a 6 GHz link. The AP wireless device may operate in a standalone manner or may be affiliated with one or more other devices, e.g., as part of a larger network. For example, the AP wireless device could be a member of a multi-access point (MAP) system, which could include multiple AP wireless devices, in some embodiments.

The AP wireless device may be capable of establishing a wireless association with one or more non-AP (or "STA") wireless devices. Such wireless associations may be established using Wi-Fi, wireless communication techniques that are based at least in part on Wi-Fi, and/or any of various other wireless communication technologies, according to various embodiments. For example, an access point (AP) wireless device may provide (e.g., broadcast) beacon transmissions including information for associating with the AP wireless device, and one or more other wireless devices (e.g., non-AP wireless devices) may request to associate with the AP wireless device using the information provided in the beacon transmissions, as one possibility. Use of (e.g., unicast) probe requests and probe responses may also be possible, in some instances, for a non-AP wireless device to obtain AP parameters and/or other system information for the AP wireless device. Variations and/or other techniques for establishing an association are also possible.

The AP wireless device may provide wireless local area network functionality to associated wireless devices, at least according to some embodiments. As part of the wireless local area network functionality, it may be possible for wireless devices to contend for medium access and perform wireless transmissions on one or more wireless communication channels (each of which could possibly include multiple sub-channels) according to general provisions of the wireless communication technology in use by the wireless local area network (e.g., Wi-Fi, as one possibility) and/or network specific parameters configured by the AP wireless device.

For example, at least according to some embodiments, performing a downlink data transmission from the AP wireless device to a non-AP wireless device in such a wireless local area network may include contending for medium access (e.g., to avoid collisions and potential interference), and, once medium access is obtained, transmitting a physical layer (PHY) protocol data unit (PPDU) (which may also be referred to as a downlink frame) to the destination wireless device. The downlink frame may include physical layer signaling (e.g., including a preamble for frame detection, timing and frequency synchronization, channel estimation, etc., and header information indicating packet configuration, format, data rates, channel occupation time, and/or other control information) and data (which may in turn include one or more higher layer packets, such as media access control (MAC) protocol data units (MPDUs). Note that other types of transmissions (e.g., including triggered uplink frames, enhanced distributed channel access (EDCA) uplink frames, transmission opportunity (TXOP) sharing for peer-to-peer (P2P) communications, etc.) may also be possible in such a wireless local area network.

Prior to or during an existing association with a non-AP wireless device, the AP wireless device may provide BSS load information to the non-AP wireless device. For example, such information may be provided in broadcast (e.g., beacon) frames, in probe response frames (e.g., in response to probe request frames), or BSS transition management (BTM) request frames (e.g., in response to BTM query frames), among various possibilities. The BSS load information may be used to help the non-AP wireless device select one or more BSSs with which to initially associate, and/or to perform mobility management (e.g., to determine whether to perform handover from the currently associated BSS(s) to one or more different BSSs).

The BSS load information may include information relating to the BSS used to provide the BSS load information, in some embodiments. It may also or alternatively be possible that the BSS load information includes information relating to one or more other BSSs, such as those provided by the same AP wireless device on different links (e.g., an AP MLD with a 2.4 GHz link BSS, a 5 GHz link BSS, and a 6 GHz link BSS could provide complete load information for all of those links on each of those links, as one possibility), or even potentially for one or more BSSs provided by one or more other AP wireless devices (e.g., other AP wireless devices in the same MAP system, as one possibility). Providing BSS load information for multiple BSSs may reduce the time needed to identify a suitable AP and link(s) with which to associate for a non-AP wireless device (e.g., the scanning time), for example since it may reduce the need to separately receive such information from each of multiple potential BSSs, in particular when such BSSs may be operated by the same AP (e.g., by an AP multi-link device that provides BSSs on multiple links), at least in some instances.

In some embodiments, the BSS load information may include overlapping BSS (OBSS) channel utilization information for at least one BSS, and possibly for multiple BSSs (e.g., those operated by the same AP wireless device and/or one or more other AP wireless devices, as described previously herein). The OBSS channel utilization information for a given BSS may indicate a percentage of time, over a measurement period, that a channel (e.g., the primary channel) of the BSS is occupied by OBSS traffic (e.g., traffic associated with a different BSS), at least according to some embodiments.

In some embodiments, the BSS load information may include in-BSS channel utilization information for at least one BSS, and possibly for multiple BSSs (e.g., those operated by the same AP wireless device and/or one or more other AP wireless devices, as described previously herein). The in-BSS channel utilization information for a given BSS may indicate a percentage of time, over a measurement period, that a channel (e.g., the primary channel) of the BSS is occupied by in-BSS traffic (e.g., traffic associated with the BSS), at least according to some embodiments. In some embodiments, total in-BSS channel utilization (e.g., including all components in-BSS channel utilization) may be indicated; additionally, or alternatively, various components of in-BSS channel utilization may be indicated discretely. These could include in-BSS triggered utilization (e.g., a percentage of time, over a measurement period, that the channel is utilized for trigger frames and trigger-based uplink frames), in-BSS uplink EDCA utilization (e.g., a percentage of time, over a measurement period, that the channel is utilized for uplink EDCA frames), in-BSS downlink utilization (e.g., a percentage of time, over a measurement period, that the channel is utilized for downlink frames), in-BSS TXOP shared P2P utilization (e.g., a percentage of time, over a measurement period, that the channel is utilized for P2P frames using TXOPs shared by the AP wireless device), etc. Note that some of these components could be combined, in some instances; as one such example, it may be possible that in-BSS TXOP shared P2P utilization is included as part of in-BSS triggered utilization rather than being separately indicated, if desired.

It may be possible that the BSS load information can additionally or alternatively include clear channel assessment (CCA) busy utilization for at least one BSS, and possibly for multiple BSSs (e.g., those operated by the same AP wireless device and/or one or more other AP wireless devices, as described previously herein). The CCA busy utilization information for a given BSS may indicate a percentage of time, over a measurement period, that a channel (e.g., the primary channel) of the BSS is seen as busy (e.g., due to high energy detection) for unknown reasons, at least according to some embodiments. Note that in some instances, such information may be inferred and calculated by a non-AP wireless device, e.g., based on total channel utilization, OBSS channel utilization, and in-BSS channel utilization, such that it may not be necessary to include such information explicitly in the BSS load information, if preferred.

In some embodiments, the BSS load information may include load history information for at least one BSS, and possibly for multiple BSSs (e.g., those operated by the same AP wireless device and/or one or more other AP wireless devices, as described previously herein). The BSS load history information may include or be based on one or more histograms that include information from multiple BSS load samples (e.g., from one or more previous BSS load measurements and possibly also the current BSS load). For example, the AP wireless device may store/maintain such BSS load history information in order to be able to construct such histograms, or may store/maintain such BSS load history information in one more histograms directly, which may be used to provide the BSS load history information.

The BSS load history information may include one or more percentile values over an averaging window for one or more aspects of loading for the BSS. For example, a low (e.g., 10%, as one possibility), medium (e.g., 50%, as one possibility), and high (e.g., 95%, as one possibility) percentile value, over the averaging window, for each of the aspects of BSS load for which BSS load history information is provided, could be indicated. Note that other (e.g., additional or alternative) percentile values are also possible. In some embodiments, the BSS load history may include such information for in-BSS load (e.g., for total in-BSS utilization and/or for each of various components of in-BSS utilization) and/or OBSS load. Additionally, or alternatively, the BSS load history may include such information for one or more legacy BSS load element fields (e.g., STA count, channel load, admission capacity), extended BSS load element fields (e.g., HE STA count, utilization, frequency underutilization, spatial stream underutilization), one or more high efficiency (HE) BSS load element fields (e.g., MU-MIMO capable STA count, spatial stream underutilization, observable secondary 20 MHz utilization, observable secondary 40 MHz utilization, observable secondary 80 MHz utilization). The load history information may also include an indication of the number of BSS load samples included in the load history information, and/or the duration of the averaging window used for the load history information, at least according to some embodiments.

In some instances, an AP wireless device that operates a BSS may spend also spend some time in a power save (or "doze") state. For example, an AP wireless device could be a mobile AP with limited power availability (e.g., from battery reserves), or could temporarily disable or make unavailable its AP functionality due to co-existence and/or other considerations. During such times, the AP may not perform channel utilization measurement. For such scenarios, it can potentially be beneficial to support providing AP power save operation information as part of the BSS load information. Such information could be provided in a doze state field of the BSS load information that can signal a percent of time over a measurement period that the AP has not been available in the channel, at least according to some embodiments.

Some wireless communication systems could potentially make use of cooperative transmission schemes, e.g., in which multiple APs operate on the same channel with at least some degree of coordination. For example, cooperative BSS utilization could include sharing a transmit opportunity with a cooperating OBSS, in some embodiments. Such cooperative BSS utilization could be included as part of the OBSS utilization, or as part of In-BSS utilization, though this type of channel utilization may have different characteristics than either OBSS or In-BSS channel utilization, at least in some embodiments. As another possibility, cooperative BSS utilization could be reported as its own type of channel utilization. For example, it may be possible to include a cooperative BSS utilization field as part of the In-BSS load field of the BSS load information.

Another type of information that could be included in the BSS load information is transmit opportunity (TXOP) duration distribution information. In some instances, different systems with different TXOP duration distributions could have the same channel utilization profiles, but because of the differing TXOP duration distributions, those systems could provide different performance for different use cases. For example, with all else equal, a system with shorter TXOP durations may provide better performance for STA device with low latency traffic, at least in some embodiments, for example since the shorter TXOP durations can potentially mean a shorter channel access delay on average. Accordingly, in some embodiments, the BSS load information may include TXOP duration distribution information. In some instances, this could include an indication of the density of TXOP durations between each of multiple duration intervals. Other formats are also possible. This information could be provided for any of various measurement periods, for example including over the most recent load history sample (e.g., the last averaging period, which could be a target beacon transmission time (TBTT) interval), and/or over multiple recent load history samples (e.g., in a BSS load histogram), among various possibilities.

As previously noted herein, the BSS load information may be provided by the AP wireless device in any of a variety of ways. One such possibility may include providing the BSS load information in one or more broadcast management frames. The broadcast management frame(s) could include one or more beacon frames (e.g., a delivery traffic indication message (DTIM) beacon, and/or a potentially separate ultra high reliability (UHR) beacon frame, as various possibilities). In some embodiments, it may be possible that different amounts of BSS load information are provided in different broadcast frames. For example, certain beacons could include a 'short' UHR BSS load element, which may include BSS load information (e.g., potentially including any or all of OBSS utilization information, in-BSS utilization information, and/or load history information) for the BSS in which the beacon is being transmitted, while other beacons could include a 'long' UHR BSS load element, which may include BSS load information (e.g., potentially including any or all of OBSS utilization information, in-BSS utilization information, and/or load history information) for both the BSS in which the beacon is being transmitted and any other BSSs operated (e.g., on other links) by the same AP wireless device.

Another such possibility may include providing the BSS load information in a probe response frame. For example, a non-associated non-AP wireless device may send a probe request frame to the AP wireless device via one BSS to request BSS load information for the BSS and/or one or more other BSSs, and the AP wireless device may send a probe response frame to the non-AP wireless device that includes the requested information. In such a scenario, it may be possible for the non-AP wireless device to request specific parameters for the BSS load information, for example including a level of BSS load history information detail requested, an averaging window and/or number of BSS load samples of the BSS load history information requested, for which BSS(s) the BSS load information is requested, and/or any of various other parameters for the BSS load information request. Alternatively, it may be possible that the probe request format supports only limited or no specific parameter requests for the BSS load information. Note that, in some embodiments, a probe request/response frame exchange may be used by a non-AP wireless device while in a non-associated state, and may be an unencrypted frame exchange.

Still another possibility may include providing the BSS load information in a BTM request frame. For example, an associated non-AP wireless device may send a BTM query frame to the AP wireless device via one BSS to request BSS load information for the BSS and/or one or more other BSSs, and the AP wireless device may send a BTM request frame to the non-AP wireless device that includes the requested information. As in the previously described scenario, it may be possible for the non-AP wireless device to request specific parameters for the BSS load information, for example including a level of BSS load history information detail requested, an averaging window and/or number of BSS load samples of the BSS load history information requested, for which BSS(s) the BSS load information is requested, and/or any of various other parameters for the BSS load information request. Alternatively, it may be possible that the BTM query format supports only limited or no specific parameter requests for the BSS load information. Note that, in some embodiments, a BTM query/request frame exchange may be used by a non-AP wireless device while in an associated state, and may be an encrypted frame exchange.

The non-AP wireless device may select a BSS with which to associated based at least in part on the BSS load information (454). This may include an initial BSS selection (e.g., based on BSS load information provided by an AP wireless device in broadcast management frames and/or probe response frames while the non-AP wireless device is in a non-associated state), as one possibility. As another possibility, this may include a BSS selection for a transition or handover (e.g., based on BSS load information provided by an AP wireless device in broadcast management frames, probe response frames, and/or BTM request frames while the non-AP wireless device is already in an associated state with a BSS).

The selection may be based on one or more of the OBSS utilization, in-BSS utilization, and/or BSS load history information included in the BSS load information. In some instances, the selection may further be based at least in part on the type(s) of traffic and/or channel access mechanism(s) supported and/or in use by the non-AP wireless device. For example, the selection could be based on whether the non-AP wireless device has low latency traffic (e.g., traffic with a delay bound), whether the non-AP wireless device has best effort and/or background traffic, whether the non-AP wireless device uses triggered uplink for channel access, whether the non-AP wireless device uses EDCA uplink for channel access, and/or any of various other considerations. Such considerations, in conjunction with the BSS load information provided by the AP wireless device, may result in the non-AP wireless device being able to select one or more links that are expected to provide better performance for the specific circumstances of the non-AP wireless device, at least in some instances. For example, for low latency traffic, OBSS utilization and CCA busy may be a relatively important metric (e.g., lower OBSS utilization and CCA busy may be preferred for low latency traffic, in some instances), while for best effort and/or background traffic, overall channel idle time may be a more important metric than the breakdown of specific components of the total channel utilization. Other relations between specific circumstances of the non-AP wireless device and the various components of BSS load information are also possible. Similarly, the load history information may provide a more accurate long-term profile of the various aspects of channel utilization, which may, for example, help a non-AP wireless device in determining how likely current values for total channel utilization, CCA busy, OBSS utilization, in-BSS utilization, etc., are to be representative of corresponding future values.

Thus, according to the method of Figure 4, it may be possible for an AP wireless device to provide a detailed breakdown of channel utilization components for a network provided by the AP wireless device, which may assist non-AP wireless devices to more quickly and effectively select an AP with which to associate, a multi-link operation mode, and/or operated links, among various possible benefits, at least according to some embodiments.

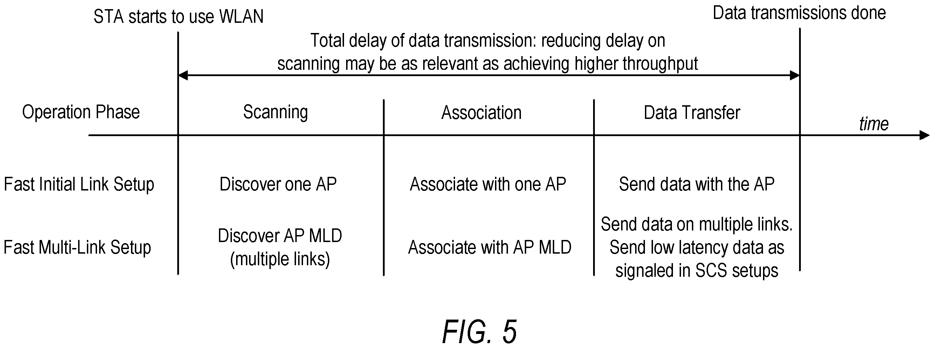

### Figures 5-30 and Additional Information

Figures 5-30 illustrate further aspects that might be used in conjunction with the method of Figure 4 if desired. It should be noted, however, that the exemplary details illustrated in and described with respect to Figures 5-30 are not intended to be limiting to the disclosure as a whole: numerous variations and alternatives to the details provided herein below are possible and should be considered within the scope of the disclosure.

A STA may generally need to scan available APs and AP MLDs to associate for the first time with an AP or AP MLD. The scanning may also be needed when the STA switches to operate in a different network (e.g., from a home network to a carrier network, as one possibility). The scanning of available networks may typically be ongoing in the background during STA operation. It may be the case that a network only advertises the available APs in its network, e.g., such that no cross-network scanning assistance is provided.

Figure 5 illustrates example aspects of possible timelines for the total delay of data transmission for single-link and multi-link operation, according to some embodiments. As shown, for fast initial link setup (FII,S), scanning may be performed to discover one AP with which to associate, then association may be performed to establish a link with that one AP, before data transfer can be performed to send data with the AP. For fast initial multi-link setup (FMLS), scanning may be performed to discover an AP MLD (e.g., that provides multiple links), then association may be performed to establish links with that AP MLD, before data transfer can be performed (e.g., potentially on multiple links) to send data with the AP MLD. This may include sending low latency data as signaled in stream classification service setup with the AP MLD.

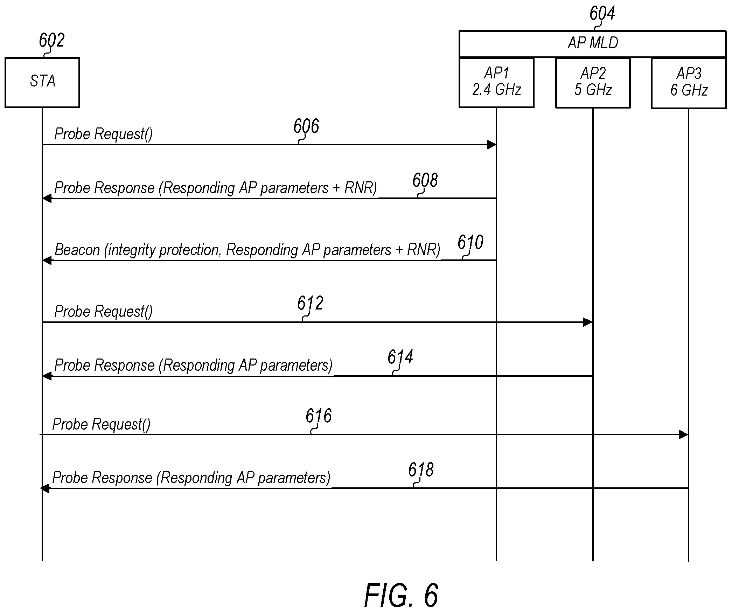

Figure 6 is a signal flow diagram illustrating a possible example AP MLD scanning process, according to some embodiments. A non-AP STA may actively or passively scan available APs and AP MLDs to try to find a suitable AP or AP MLD for association. To associate with an AP / AP MLD, the STA may need at least network service set identifier (SSID) and security mode, AP MLD capabilities (e.g., Wi-Fi 7 MLD, Wi-Fi 8 AP MD, low latency, etc.), and achievable throughput and Quality of Service (QoS) on the AP, at least according to some embodiments. In the illustrated scenario, a STA may scan first on the 2.4 GHz band, as the 2.4 GHz band may have only 3 non-overlapping channels and 2.4 GHz APs may commonly have good coverage range. During scanning, the STA may try to receive beacons and probe responses; these frames may contain reduced neighbor report (RNR) elements, which may identify other (affiliated) APs on other bands and their operating channels. Thus, as shown, the STA 602 may send a probe request to an AP1 (e.g., that operates on 2.4 GHz) of an AP MLD 604 (606), and may receive a probe response including responding AP parameters and RNR (608). The STA 602 may also or alternatively receive beacon information from the AP1 (610), which may include integrity protection, responding AP parameters, and RNR. Using the information in the RNR, the STA may send a probe request to AP2 of the AP MLD 604 (612), and may receive a probe response including responding AP parameters (614). Similarly, the STA may send a probe request to AP3 of the AP MLD 604 (616), and may receive a probe response including responding AP parameters (618).

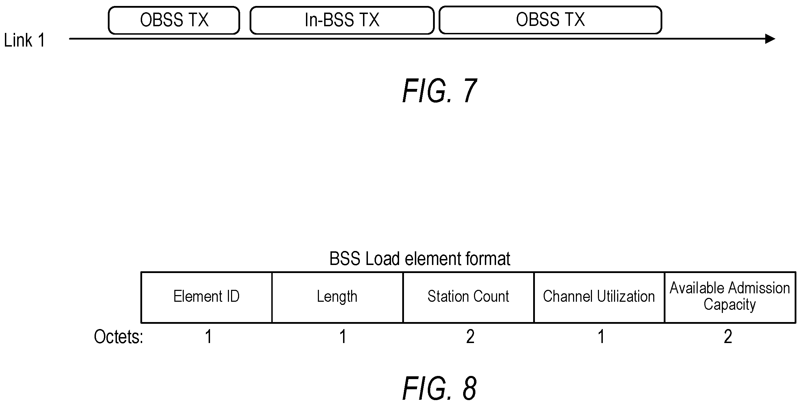

Current Wi-Fi developments (e.g., including Wi-Fi 8) may focus on ultra high reliability (UHR). Roaming, AP discovery, and AP selection may be key for reliable QoS performance. It may be the case that overlapping basic station set (OBSS) transmissions that occur on a channel cannot be controlled and add random delays to base station set (BSS) transmissions, e.g., as a BSS may not be able to use the transmission time and resources allocated by an OBSS. This may be bad for high reliability and/or low latency transmissions. Figure 7 illustrates example aspects of a possible communication timeline for a channel on which both OBSS traffic and In-BSS traffic are communicated, according to some embodiments. EDCA transmissions may also cause transmission collisions and random delays, in some embodiments. EDCA UL TXOP obtaining may cause collisions on a link. A BSS may need to have free resources for the EDCA transmissions, which may result in random (non-network controlled) OBSS / BSS transmissions on a link. A non-AP MLD may select the AP or AP MLD for association, and accordingly information on how suitable a link is for low latency transmissions may be useful for such selection. Thus, it may be beneficial for an AP to provide relevant information for OBSS transmissions and EDCA transmissions in the link, at least according to some embodiments.

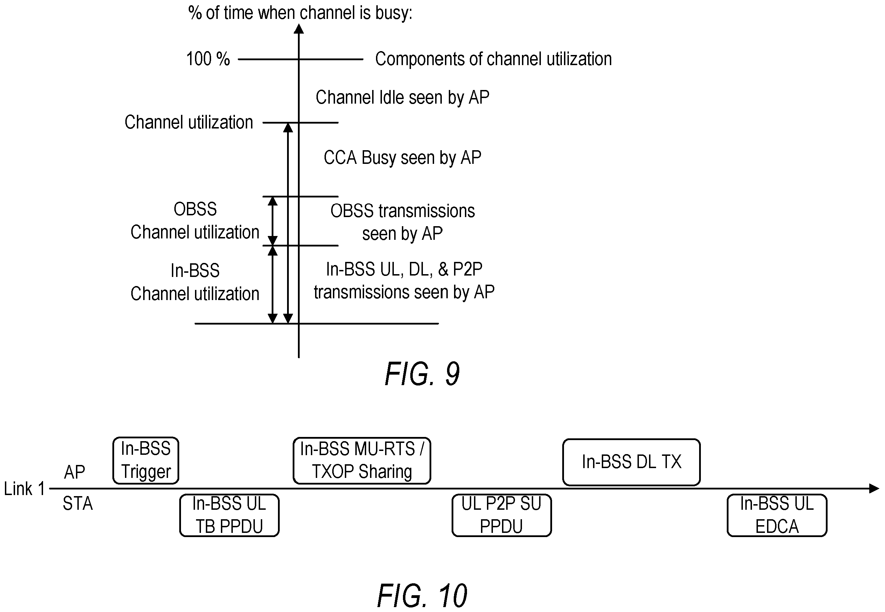

Currently, the BSS load element signals primary channel utilization, or the percent of time when clear channel assessment (CCA) is busy or a network allocation vector (NAV) is set, as well as the number of associated STAs in the AP. Figure 8 illustrates one such possible BSS load element, according to some embodiments. The channel utilization may, however, include a variety of different component aspects. Figure 9 illustrates various such possible components of channel utilization for a channel used by a BSS, according to some embodiments. At least in some instances, it may be useful for BSS load information to be provided that includes more information regarding OBSS channel utilization and/or In-BSS channel utilization. The In-BSS channel utilization may signal the percent of time when an AP has received UL transmissions, transmitted DL frames, or TXOP shared P2P transmissions, according to some embodiments. The OBSS channel utilization may signal the percent of time when an AP has detected OBSS transmission in the primary channel. In some instances, the remainder from the BSS load, minus the OBSS load, minus the in-BSS load, may form the percent of CCA busy (e.g., including transmission collisions or interference seen in the channel). The AP may perform ongoing measurement for BSS loads, and BSS load information may be transmitted in beacon frames and probe responses.

The STA may also measure BSS loads in active mode, at least in some embodiments. In such a case, the STA may compare the internally measured statistics and the statistics received from the AP. For example, such a comparison may be used to determine whether the operating environment is the same for the STA as for the AP, and/or whether the STA or AP are impacted by hidden STAs. The STA may consider both the internally measured BSS load information and the received BSS load information when deciding whether to roam, at least in some embodiments.

Note that in some instances, it may be the case that an AP is not able to measure the BSS load at all times. For instance, an AP may operate in a power save mode to reduce power consumption, such that the AP may not be available all of the time for STA transmissions. An AP may use such a power save mode in order to reduce operating costs, or because the AP is battery powered with correspondingly increased importance to reducing power consumption, among various possibilities. Alternatively, or additionally, the AP device may be a mobile AP, such as a laptop, tablet, or smart phone, which is temporarily sharing internet access. In such scenarios, the AP device may operate multiple radios and some radios may prevent BSS load measurement, or the AP may share its WLAN operation time to devices operating in different links, which may prevent continuous BSS load measurement.

Accordingly, in some instances, the BSS load information may include a measurement percent field, which may indicate a percent of time when the AP has BSS load measurement ongoing. A maximum possible value for the field may be configured to indicate that the AP has been performing such measurement all of the time. If the measurement percent field indicates a lower value, the BSS load statistics provided may potentially be understood by a receiving STA to have a reduced precision level, for example because the AP may not be available to measure for a certain portion of the time. AP unavailability could also result in situations where some transmissions may not be detected, e.g., due to the AP being unable to synchronize and receive the transmission during the preamble transmission. This may increase the CCA busy time, or the time that the AP considers the channel to be idle, at least in some scenarios.

An STA may be able to determine AP availability times from power save information shared by an AP. For example, an AP may be available during the beacon transmission time, and/or the AP may periodically wake up to transmit and receive transmissions. It may be the case that low latency real time applications require periodical operation from the AP. If a STA plans to operate during the AP available times, the BSS load information may provide sufficiently precise and meaningful load estimation, at least in some embodiments.

In some instances, a STA may be able to estimate how aggressively an AP operates in power save mode. For example, if an AP has very little idle time, the AP may be likely to be available only for the minimum time to send the buffered data for the AP. In such a scenario, it may be the case that the STA determines to avoid transmission to the AP when it does not explicitly signal to be available or if the AP is not known to be available from other frames' transmission flows.

In some embodiments, an AP may include an indication of a measurement start time for the load measurement statistics provided by the AP. This may be useful, for example, since the AP may not have any measurement statistics available for before the measurement start time, such that this may provide an indication of the sample size and potentially the relevance of the load information signaled by the AP.

The AP may further track the In-BSS transmission modes time use. As an example, Figure 10 illustrates a possible communication timeline including a variety of possible in-BSS transmission modes. The AP may report the percentage of the transmission time use for any or all of UL EDCA, UL Triggered, and DL transmissions. Optionally, the TXOP shared P2P transmissions may be listed too.

In some instances, it may be possible that a link has poor MU EDCA parameters, but STAs continue to operate EDCA on the link. The UL EDCA transmissions may effectively create randomness for low latency transmissions. UL EDCA transmissions may require available transmission resources and idle time to allow good throughput for EDCA. Triggering performance of the AP may not perform well.

In some instances, it may be the case that a STA considers that a BSS is not reliable to transmit low latency Wi-Fi 8 transmissions if the AP reports long durations of OBSS transmissions and/or CCA busy. If the STA plans to use triggered access, then the STA may prefer to look for a BSS with no OBSS transmission times and no CCA busy times. High In-BSS DL transmission time and triggered access time may be acceptable for such a STA, at least in some instances, for example since an AP may still be able to schedule transmissions to the STA according to its scheduling logic. For a STA looking to transmit best effort and background traffic, it may be preferable to look for a BSS with idle time available. Low latency transmissions may not require idle time on the BSS, as the low latency transmissions may be able to replace best effort and background transmissions. If a STA plans to use EDCA, then the STA may benefit from looking for a BSS with more channel idle time, e.g., as the channel idle time may be available for EDCA transmissions. An AP with a lot of triggered transmissions may be less suitable for an EDCA transmitted, for example as the triggered transmissions may have priority to obtain TXOPs and cause fewer TXOPs to be obtained for EDCA transmissions.

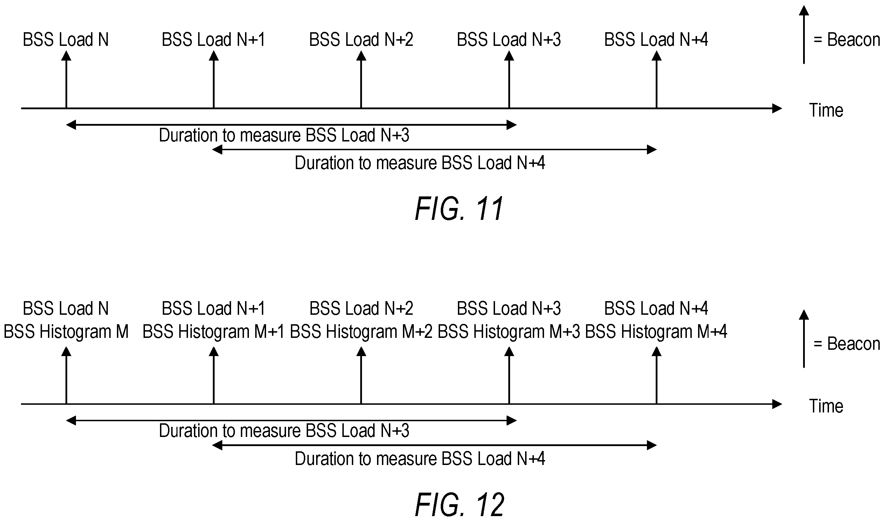

It may be the case that an AP provides only the latest BSS load information in beacons and probe response frames. Figure 11 illustrates example aspects of such an approach, according to some embodiments. The channel load information may be averaged over a static averaging period. For example, in the illustrated scenario, BSS load may be measured and averaged over three beacon periods. The duration of the averaging period may not be signaled (e.g., may be known only to the measuring AP). Thus, in such a framework, if a STA wants to obtain BSS load history, the STA may need to receive multiple consecutive beacons. However, reception of multiple beacons may consume power and radio resources, especially if a STA monitors multiple APs. Additionally, a STA may not be available to receive all consecutive beacons, so it may not be able to get reliable load history. Accordingly, a scanning STA may benefit from BSS load history information being provided to the STA. This information may assist the STA to estimate whether the load for an AP is temporary or has been ongoing for some time, for example, and the STA may get a better understanding of the BSS load variation.

Figure 12 illustrates example aspects of an approach in which such load history information can be provided, according to some embodiments. In the illustrated scenario, in addition to BSS load, a BSS histogram with BSS load history information may be provided in a beacon frame. The histogram may include information from previous BSS load elements and In-BSS fields. BSS load statistics, e.g., including the number of BSS load samples (beacons) on which the BSS load is considered, may be provided. The averaging window may provide the duration of the BSS load averaging. The histogram may provide 10, 50, and 95 percentiles of the BSS load value. The In-BSS load field of the matching BSS load field value percentile may be provided, for each percentile. The statistics for other BSS load samples may be provided for other numbers of BSS load samples. The probe request or BTM request may request BSS load histogram information for other durations and/or for multiple durations, in some embodiments. An associated STA may use the information to benchmark estimated performance on the link(s).

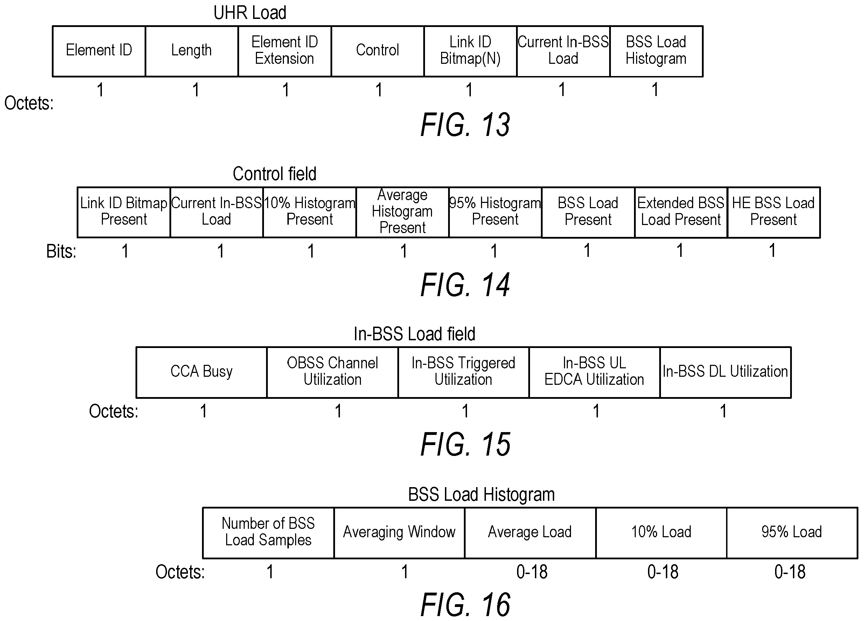

Figures 13-16 illustrate example details of a possible UHR load element and various possible fields of such a UHR load element, according to some embodiments. The UHR load element may be able to be used to report the current In-BSS load (e.g., may include an In-BSS load field) that was obtained over the last averaging period, as well as histogram information for the In-BSS field values of the last number of BSS load samples. The averaging window may provide the duration of the BSS load averaging. The load histogram field may provide 10, 50, and 95 percentiles of the BSS load values. The In-BSS load field of the matching BSS load field value percentile may be provided. If a BSS load present, extended BSS load present, or HE BSS load present field is set to 1, then the content of the respective element may be included in the BSS load histogram. The link ID bitmap may allow for statistics reporting for other affiliated APs of the reporting AP MLD. The In-BSS load may always be present in the average load, 10% load, and 95% load fields. The corresponding histogram content for BSS load, extended BSS load, and HE BSS load fields may be present if the respective field in the control field has the value of 1, in some embodiments.

Note that it may be possible to provide load history information (e.g., including one or more histograms or content derived from one or more histograms) for a BSS in other scenarios, e.g., in addition or alternatively to in conjunction with a UHR load element, at least in some embodiments. For example, it may be possible to provide a very high throughput (VHT) load element histogram (or otherwise provide load history information) in conjunction with a VHT load element, and/or to provide a HE load element histogram (or otherwise provide load history information) in conjunction with a HE load element, even when no UHR load element is being provided.

As noted with respect to Figure 6, the beacons and probe response frames may include only limited performance information, for example potentially only optionally including the performance information (BSS load) of the transmitting AP. Accordingly, for an AP MLD, a STA may need to obtain performance information from each affiliated AP separately, which may add delays. Making information for all affiliated APs easily available may facilitate improved selection of the link(s) in which the associated STA operates.

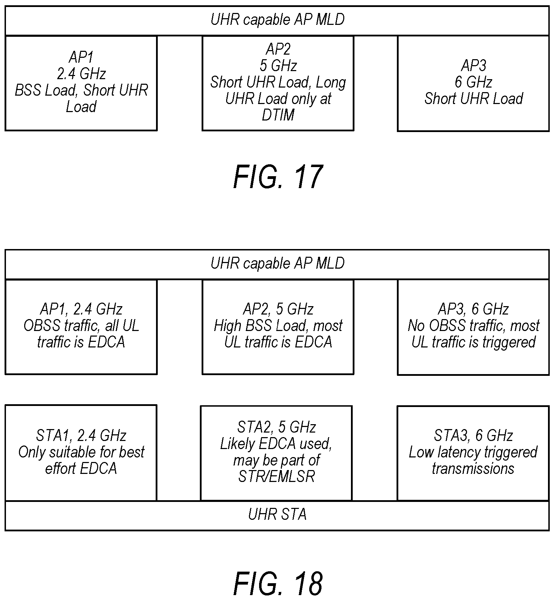

Figure 17 illustrates aspects of one example of possible UHR AP beacon content including performance information signaling. One AP may send BSS load and UHR load elements with a complete set of performance information for all affiliated APs. In the illustrated example, this may be AP2, operating in the 5 GHz frequency band. The full set of performance information may be transmitted in a delivery traffic indication message (DTIM) beacon. Alternatively, the UHR load information may be sent in a separate UHR beacon frame. Otherwise, the APs may send the most recent BSS load and/or the UHR load with the most recent information for the reporting BSS (e.g., as shown for all of AP1, AP2, and AP3). The BSS load element may be present for legacy STAs (e.g., may be provided by AP1 operating in the 2.4 GHz band, in the illustrated scenario). If there are no legacy STAs, it may be the case that an AP only provides the UHR load element (e.g., as shown for AP2 and AP3 in the illustrated scenario). Scanning APs may be able to obtain the complete set of all affiliated APs performance information by sending a probe request (or ML probe request) or BTM query frame.

If a UHR STA has low latency traffic, the UHR STA may prefer to select an AP MLD that does not report OBSS traffic at least on one link. In this case, the STA may choose to operate on that link or the link may be selected as part of the operated STR or EMI,SR links. If the associated AP MLD has OBSS transmission or an appreciable amount of CCA busy time on a 5 or 6 GHz link, it may be beneficial for a STA to operate on STR or EMI,SR mode, e.g., as multi-link operation may mitigate delays caused by OBSS transmission or CCA busy periods. It may be the case that an AP has triggered access only on some links. This may be visible through load information (e.g., with high UL triggered access amounts compared to EDCA use), in some embodiments. An AP may force EDCA users to other links, if another link has higher UL EDCA usage. The STA may estimate the AP allowed channel access mechanism per link and prepare to operate in accordance with these mechanisms. The STA may additionally or alternatively estimate the urgency of roaming based on links' load information; for example, a STA may actively roam, if an AP MLD has available only congested links or links unsuitable for low latency traffic, at least in some instances.

Figure 18 illustrates aspects of a possible example set of UHR AP load characteristics for links of an AP MLD, and an example of a potential corresponding UHR STA operation profile for the links, according to some embodiments. In the illustrated scenario, the link operated by AP1 in the 2.4 GHz frequency band may include OBSS traffic and all UL traffic may be EDCA. The link operated by AP2 in the 5 GHz band may have a high BSS load, with most UL traffic being EDCA. The link operated by AP3 in the 6 GHz frequency band may have no OBSS traffic and most UL traffic may be triggered. In this set of circumstances, the UHR STA may consider the 2.4 GHz link to be only suitable for best effort EDCA, the 5 GHz link to be most likely used for EDCA, and potentially to be part of a set of STR/ EMLSR links, and the 6 GHz link to be preferred for low latency triggered transmissions, at least in some instances.

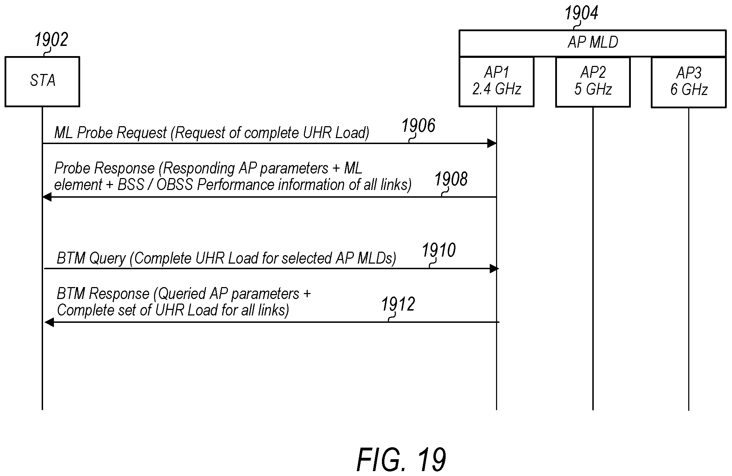

Figure 19 is a signal flow diagram illustrating another possible example AP MLD scanning process, in which more detailed UHR load information can be provided, according to some embodiments. In the illustrated scenario, a STA 1902 may send a multi-link (ML) probe request (that includes a request for complete UHR load information) to an AP1 (e.g., that operates on 2.4 GHz) of an AP MLD 1904 (1906), and may receive a probe response including responding AP parameters, a ML element, and BSS / OBSS performance information for all links operated by the AP MLD 1904 (1908). The STA 1902 may also or alternatively transmit a BTM query to the AP1 (1910), which may request complete load information for one or more selected AP MLDs. In this case, the AP MLD 1904 may provide a BTM request to the STA 1902 (1912), including the queried AP parameters and the complete set of UHR load information for all links for the selected AP MLDs.

The STA getting all affiliated APs' performance information in ML probe response frames may help the STA to select the operated links. A UHR STA may be able to obtain the UHR load periodically, e.g., via beacon information, or may request UHR load information periodically, according to various embodiments. In AP MLD selection for roaming, the STA may be able to obtain UHR load information for selected AP MLDs, which may help the STA to select a suitable AP MLD for roaming. Getting such information in one signaling operation may reduce the need to scan other channels, make link setup faster and more precise, and/or reduce reporting overhead, among various possible benefits.

While it can be possible that an AP always operates in an active state, it can also be possible that an AP sometimes operates in a power save state, which can also be referred to as a "doze" state. For example, some devices may be capable of operating as mobile APs, which may be powered by one or more batteries with limited capacity, such that operating in a power-efficient manner may be more important than for fixed-deployment APs with a constant power source such as a wall outlet, at least in some embodiments. Some versions of IEEE 802.11 may potentially allow affiliated AP(s) to temporarily suspend operations (e.g., such that the AP is temporarily unavailable), as one such possibility.

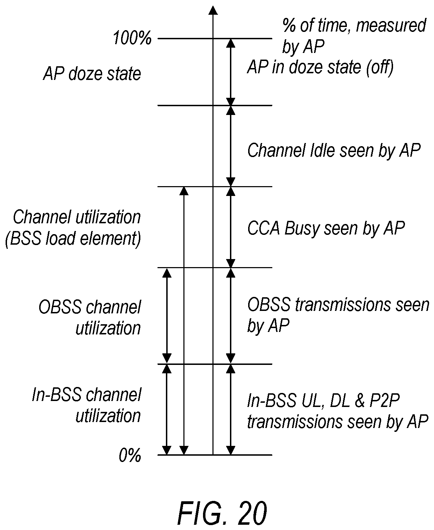

Accordingly, for some AP operation, the amount of time spent in doze state can also be useful to indicate to associated or potentially associated STAs. Figure 20 illustrates possible components of AP time usage corresponding to a channel used by a BSS for an example scenario in which the AP operates in a power save state for a portion of the time, according to some embodiments. In the illustrated scenario, channel utilization information could be provided to signal a percent of time when the AP has not been available in the channel (e.g., while in the AP doze state), e.g., potentially in addition to channel idle time, CCA busy, OBSS transmissions, and In-BSS transmissions.

This information can be useful to report since it may be the case that channel utilization measurement is not possible during the doze state. The doze state signaling can indicate the percent of time when the AP has radio off. This can allow the scanning STAs to learn the percentage of time that the AP has been available, which can help STAs to operate in power save mechanisms where the AP dynamically extends its availability time. In some instances, low idle time and high doze time can indicate that a mobile AP is more aggressively saving power, while a high idle time and low doze time can indicate that a mobile AP is sleeping only during inactive times.

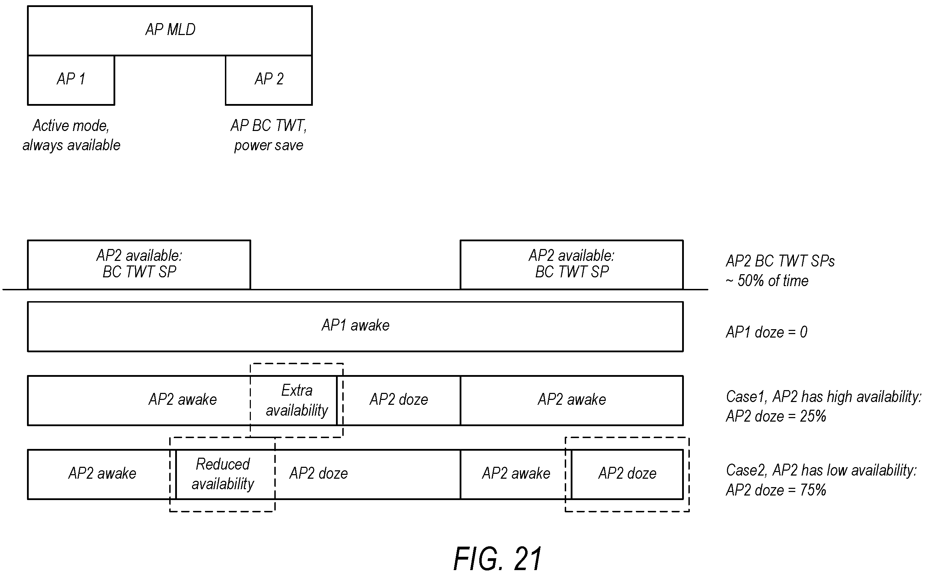

Figure 21 illustrates an example of a scenario in which an AP doze field could be used, in which AP broadcast (BC) target wake time (TWT) features are used for power save operation. In the illustrated scenario, for an AP MLD, AP 1 is in active mode and always available, while AP 2 utilizes AP BC TWT for power save. Beacon transmissions can indicate the AP BC TWT service periods (SPs), when the AP is available (e.g., future information for the AP). In the BSS load element, the AP using the doze state can then signal the realized power save from its history. This can help to indicate the overall availability for the AP using the power save feature, including whether the AP is available only for the minimum time or can extend its availability. For example, as shown, in "Case 1", AP2 has more availability (AP2 doze = 25%), while in "Case 2", AP2 has less availability (AP2 doze = 75%). Early termination of AP SPs can also be visible through this signaling, at least in some embodiments.

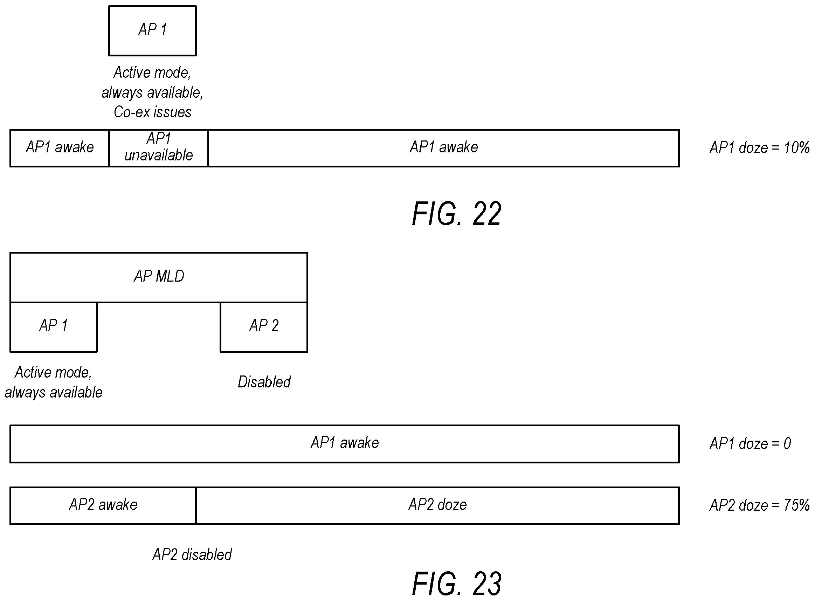

Figures 22-23 illustrate further example scenarios with AP power save, according to some embodiments. As shown in Figure 22, an AP in active mode that intends to be always available could also have co-existence issues leading to unavailable time, which could be reported as AP doze time. As shown in Figure 23, an AP that has been disabled could also have such time reported as AP doze time.

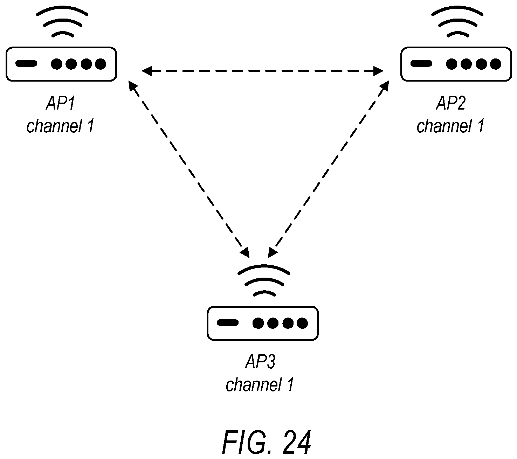

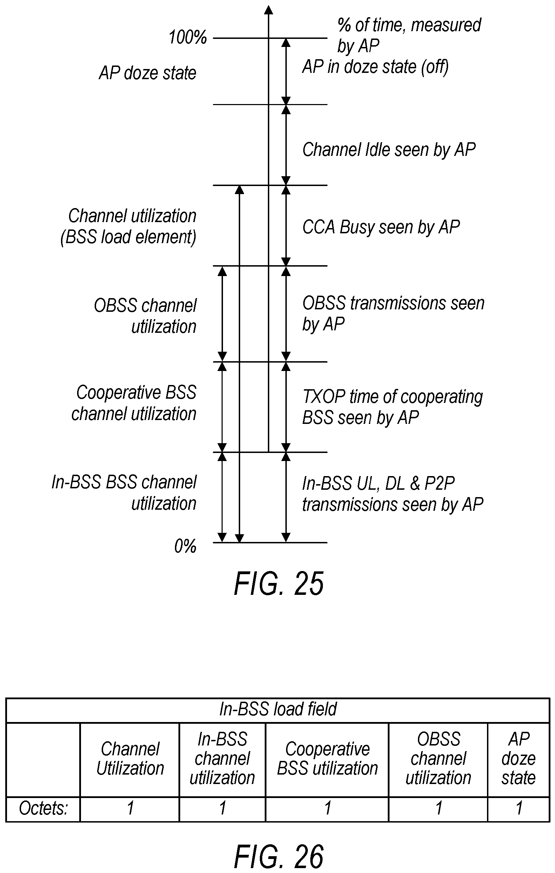

Cooperative transmission schemes can also potentially be considered as an aspect of providing detailed BSS load information. Figure 24 illustrates an example of 3 APs using a coordinated time division multiple access (C-TDMA) scheme to share use of a channel, according to some embodiments. Other cooperative transmission schemes (C-SR, C-OFDMA, etc.) are also possible. Cooperative transmissions can cause high channel utilization; multiple APs may operate on the same channel, and cooperative transmissions may have very long TXOPs or multiple TXOPs with minimal interframe space (IFS) between the TXOPs. Thus, it can be possible that cooperative transmissions leave little opportunity for EDCA and device-to-device transmissions. Figure 25 illustrates possible components of AP time usage further including cooperative BSS channel utilization among the other components of AP time usage, according to some embodiments.

The time when transmission is in the BSS of a reporting AP can be classified as In-BSS utilization. C-TDMA or C-RTWT TXOP shared to other BSS could be classified as OBSS utilization, because OBSS is transmitting, as one possibility. Cooperative transmissions may have more deterministic delay and throughput performance than legacy OBSSs, however, so OBSS classification may potentially cause scanning STAs to consider the cooperative BSSs performance to be poorer than justified. As another possibility, C-TDMA or C-RTWT TXOP shared to other BSS could be classified as In-BSS utilization, because this may be considered similar to reporting BSS transmitting to other STAs in a "larger in-BSS". However, it may be the case that during the shared TXOP the reporting BSS cannot transmit, so such In-BSS classification may potentially cause scanning STAs to consider the cooperative BSSs performance to be better than justified. Accordingly, it may be beneficial, at least in some embodiments, to support new reporting of cooperative-BSS utilization time for TXOP shared to cooperating OBSS, e.g., to provide more accurate reporting for the scanning STAs. Figure 26 is a table illustrating aspects of an example In-BSS load field that includes an indication of cooperative BSS utilization, according to some embodiments. The scanning STA can thus detect the percentage of the time other BSSs in the cooperating scheme use the channel.

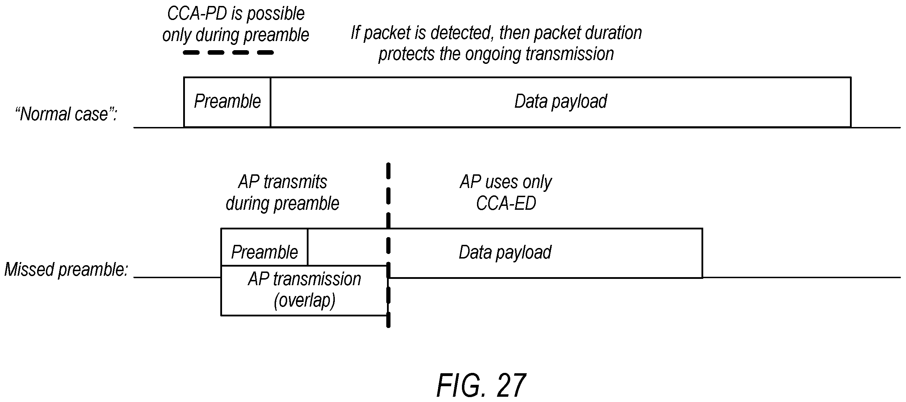

An AP could potentially miss OBSS transmissions due to its energy detection (ED) and preamble detection (PD) levels. The In-BSS transmission value can potentially be precise, however, In-BSS transmission can be transmitted on top of OBSS transmissions; if an AP misses or ignores a preamble of an OBSS transmission, then it can be the case that only clear channel assessment (CCA) ED is applied for the OBSS transmission, and the channel can appear to be idle. Figure 27 illustrates example aspects of such scenarios in which "normal" preamble detection occurs, and in which OBSS preamble detection is missed due to overlap with AP transmission.

CCA-PD level may not be static in an AP; an AP may have OBSS specific CCA-PD levels, and the AP may increase CCA-PD level, if the AP gets congested. CCA-ED can be set to -62dBM, as one possibility, or an AP may also use lower ED thresholds. It may be the case that the lower the threshold, the more likely detection of CCA-ED busy values becomes, so it can be possible that CCA-ED level is a static setting in an AP. Note also that it may be the case that Wi-Fi does not test CCA-PD levels of an AP under test (APUT); the APUT can have a simple text with high interference on some selected times, such that exact CCA-PD levels are not tested. An AP may thus possibly not be able to provide relevant and tested CCA-PD level information, at least in some embodiments.

Regardless of the AP CCA-PD level, the In-BSS load and OBSS load information is potentially relevant information to report to STAs. OBSS transmissions can be strong and prevent AP transmissions, In-BSS transmissions signal the time AP detects BSS transmissions on the channel, and Idle time signals whether the AP will respond with CTS on UL transmissions. The AP can typically optimize the CCA-PD level(s) for high throughput, and the results can be relevant for AP performance, such that there may be no need to provide CCA-ED and CCA-PD level reporting, at least in some embodiments. However, other configurations in which such reporting is provided are also possible.

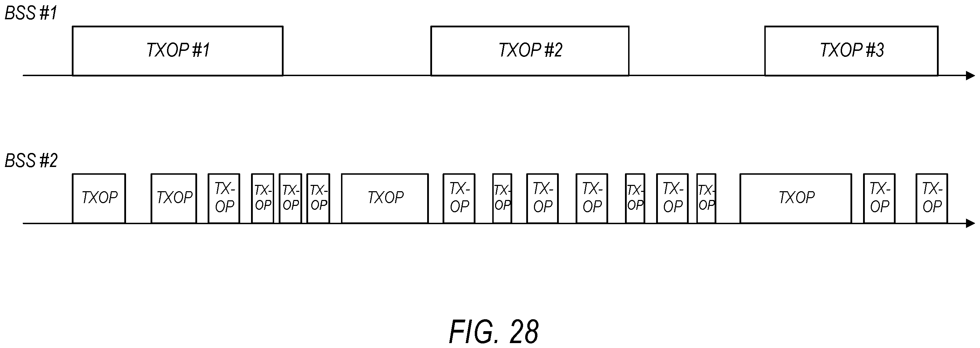

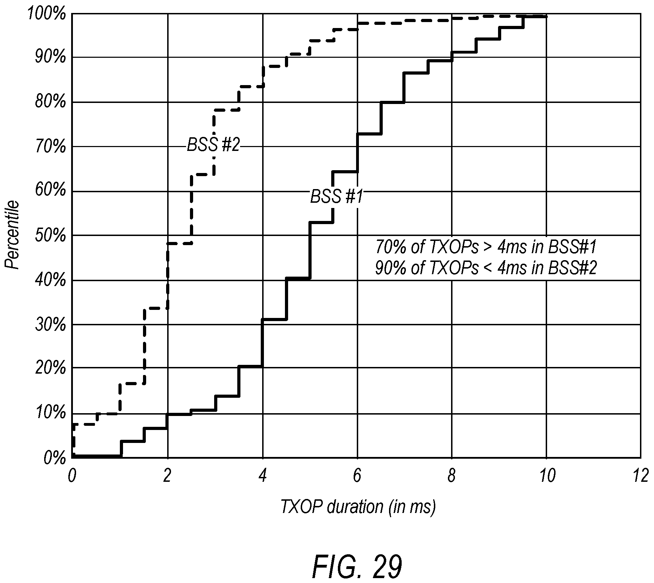

Another aspect of channel utilization that could be provided in detailed BSS load information could include information on the distribution of TXOP durations. Channel utilization itself can be opaque to the actual medium air time occupancy pattern. For example, two different BSSs could have the same channel utilization with different distributions of TXOP durations. Figure 28 illustrates an example timeline portion for such a scenario, in which BSS#1 has longer TXOPs with longer gaps between them to result in 50% channel utilization, while BSS#2 has shorter TXOPs with shorter gaps between them to also result in 50% channel utilization. Figure 29 illustrates the differing distributions of TXOP durations for these example BSSs in a line graph. A STA with low latency traffic may have better performance in BSS#2, e.g., since most of the TXOPs are shorter and the medium is likely to not be blocked for a long time by other transmissions, such that reduced channel access latency can potentially be obtained. However, without TXOP duration distribution information, such a STA could potentially be as likely to roam to BSS#1 and suffer from poorer UL QoS performance than would have been available from BSS#2.

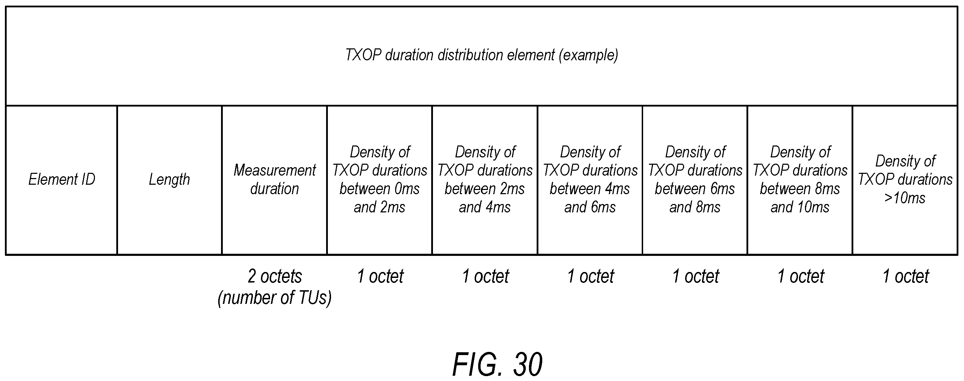

Accordingly, in some embodiments, an AP can provide TXOP duration statistics, e.g., as part of detailed BSS load information for a BSS. The TXOP duration distribution can be measured during the last averaging period TBTT interval, and indicated as part of BSS load, as one possibility. Additionally, or alternatively, as part of the BSS load histogram, the BSS load values can be provided for the last 50 or 100 (or another number) Beacon intervals (e.g., for long duration) and the TXOP durations can accordingly be provided over a longer averaging time. Figure 30 illustrates an example TXOP duration distribution element that could be used, according to some embodiments. As shown, the example element can include an element identifier, an element length indicator, an indication of the measurement period over which the TXOP duration distribution is measured, as well as indications of density of TXOP durations between various configured values. It should be noted that while the reporting ranges illustrated in Figure 30 represent one possible set of reporting ranges, other reporting ranges or bin sizes are also possible.

In some embodiments, an AP can provide two separate statistics for TXOP durations. All TXOP durations in proximity (all TXOPs and channel busy times can be included to the same statistics) can be included together, or separate statistics can be kept for In-BSS TXOP durations and OBSS TXOP durations. Thus, In-BSS TXOPs can be collected separately from OBSS TXOPs and channel busy times.

When a STA transmits UL frames using EDCA, it can be the case that the AP provides statistics on all TXOP durations in the BSS load; the STA may consider the measured TXOP durations as the likely delays caused to UL transmissions, in some instances. While using EDCA for UL transmissions may by common for STAs, triggered access for UL can potentially also be used. In triggered access, the AP can provide UL transmission time for a STA by sending trigger times that allocate resource units to the STA, or sending TXOP sharing frames (e.g., MU-RTS frames that allocate UL transmission time to the STA). For such scenarios, it may be the case that the AP reports the OBSS TXOP durations and the In-BSS TXOP durations separately. The AP may coordinate the in-BSS TXOP content and durations, and may arrange UL transmission to occur flexibly for triggered STAs. If the AP provides separate statistics for In-BSS and OBSS TXOP durations, a STA may potentially also be able to combine the two statistics by multiplying the statistics with the OBSS and In-BSS channel utilization values. It may also be possible for a STA to signal whether to provide 1 or 2 TXOP duration statistics and whether to provide the statistics for the most recent measurement period or for long term histogram values or both, according to various embodiments.

Thus, since current scanning mechanisms may not provide OBSS performance information or detailed BSS load information, which may be more relevant for UHR BSSs that support low latency transmissions, the techniques proposed herein may be used to enhance such operations by providing support for signaling more performance information regarding OBSS transmission time and channel access mechanisms and history information of the AP performance (e.g., in a histogram). Additionally, possible rules are proposed herein that could be used to determine when AP performance information is added to beacons and probe responses transmitted by an AP, and further possible techniques for providing performance information for affiliated APs in ML probe response frames. These potential enhancements may enable broadcasted information to be provided that is available for all scanning STAs for more precise AP MLD, multi-link operation mode, and operated link(s) selection, as well as for faster scanning and reduced power consumption for scanning operations, at least according to some embodiments.

It is well understood that the use of personally identifiable information should follow privacy policies and practices that are generally recognized as meeting or exceeding industry or governmental requirements for maintaining the privacy of users. In particular, personally identifiable information data should be managed and handled so as to minimize risks of unintentional or unauthorized access or use, and the nature of authorized use should be clearly indicated to users.

In addition to the above-described exemplary embodiments, further embodiments of the present disclosure may be realized in any of various forms. For example, some embodiments may be realized as a computer-implemented method, a computer-readable memory medium, or a computer system. Other embodiments may be realized using one or more custom-designed hardware devices such as ASICs. Still other embodiments may be realized using one or more programmable hardware elements such as FPGAs.

In some embodiments, a non-transitory computer-readable memory medium may be configured so that it stores program instructions and/or data, where the program instructions, if executed by a computer system, cause the computer system to perform a method, e.g., any of the method embodiments described herein, or, any combination of the method embodiments described herein, or, any subset of any of the method embodiments described herein, or, any combination of such subsets.

In some embodiments, a device (e.g., an AP 104 or a UE 106) may be configured to include a processor (or a set of processors) and a memory medium, where the memory medium stores program instructions, where the processor is configured to read and execute the program instructions from the memory medium, where the program instructions are executable to implement any of the various method embodiments described herein (or, any combination of the method embodiments described herein, or, any subset of any of the method embodiments described herein, or, any combination of such subsets). The device may be realized in any of various forms.

Exemplary methods, apparatus, wireless devices and processors are set out in the following items.
1. A method, comprising:
   by a first wireless device:
   receiving, from a second wireless device, basic service set (BSS) load information comprising overlapping BSS (OBSS) channel utilization information for a BSS; and
   selecting a BSS with which to associate based at least in part on the OBSS channel utilization information for the BSS.
2. The method of item 1,
   wherein the BSS load information further comprises in-BSS channel utilization information for the BSS,
   wherein selecting a BSS with which to associate is further based at least in part on the in-BSS channel utilization information for the BSS.
3. The method of item 2,
   wherein the in-BSS channel utilization information for the BSS comprises an indication of one or more of:
   in-BSS triggered utilization;
   in-BSS uplink enhanced distributed channel access (EDCA) utilization;
   in-BSS downlink utilization; or
   in-BSS transmit opportunity (TXOP) shared peer-to-peer (P2P) transmission utilization.
4. The method of item 1, wherein the method further comprises:
   receiving, from the second wireless device, a delivery traffic indication message (DTIM) beacon frame comprising the BSS load information.
5. The method of item 1, wherein the method further comprises:
   receiving, from the second wireless device, an ultra high reliability (UHR) beacon frame comprising the BSS load information.
6. The method of item 1, wherein the method further comprises:
   transmitting, to the second wireless device, a probe request frame; and
   receiving, from the second wireless device, a probe response frame comprising the BSS load information.
7. The method of item 1, wherein the method further comprises:
   transmitting, to the second wireless device, a BSS transition management (BTM) query frame; and
   receiving, from the second wireless device, a BTM request frame comprising the BSS load information.
8. The method of item 1,
   wherein the BSS load information further comprises load history information for the BSS.
9. An apparatus, comprising:
   a processor configured to cause a wireless device to:
   receive basic service set (BSS) load information comprising overlapping BSS (OBSS) channel utilization information and in-BSS channel utilization information for a BSS.
10. The apparatus of item 9,
   wherein the in-BSS channel utilization information comprises an indication of one or more of:
   in-BSS triggered utilization for the BSS;
   in-BSS uplink enhanced distributed channel access (EDCA) utilization for the BSS;
   in-BSS downlink utilization for the BSS; or
   in-BSS transmit opportunity (TXOP) shared peer-to-peer (P2P) transmission utilization for the BSS.
11. The apparatus of item 9,
   wherein the BSS load information is associated with a BSS operated by the second wireless device on a first link and is received from the second wireless device on the first link.
12. The apparatus of item 9,
   wherein the BSS load information is received from the second wireless device on a first link, wherein the BSS load information is associated with a BSS operated by the second wireless device on a second link.
13. The apparatus of item 9,
   wherein the BSS load information is associated with a BSS operated by a third wireless device.
14. The apparatus of item 9,
   wherein the BSS load information is provided in one of:
   a broadcast beacon frame;
   a probe response frame; or
   a BSS transition management (BTM) request.
15. The apparatus of item 9, wherein the BSS load information further comprises load history information for the BSS, wherein the load history information indicates one or more percentile values over an averaging window for one or more of:
   in-BSS load;
   OBSS load;
   one or more BSS load element fields;
   one or more extended BSS load element fields; or
   one or more high efficiency (HE) BSS load element fields.
16. A wireless device, comprising:
   one or more antennas;
   a radio operably coupled to the one or more antennas; and
   a processor operably coupled to the radio;
   wherein the wireless device is configured to:
      provide basic service set (BSS) load information comprising at least overlapping BSS (OBSS) channel utilization information for the first BSS.
17. The wireless device of item 16,
   wherein the BSS load information further comprises information indicating one or more of:
   total in-BSS channel utilization for the first BSS.
   in-BSS triggered utilization for the first BSS;
   in-BSS uplink enhanced distributed channel access (EDCA) utilization for the first BSS;
   in-BSS downlink utilization for the first BSS;
   in-BSS transmit opportunity (TXOP) shared peer-to-peer (P2P) transmission utilization for the first BSS;
   a percent of time when the wireless device has BSS load measurement ongoing; or
   a measurement start time for BSS load measurement by the wireless device.
18. The wireless device of item 16,
   wherein the BSS load information is provided in one of:
   a broadcast beacon frame;
   a probe response frame; or
   a BSS transition management (BTM) request.
19. The wireless device of item 16,
   wherein the BSS load information further comprises load history information for the first BSS, wherein the load history information indicates one or more of:
   a number of BSS load samples included in the load history information;
   a duration of an averaging window for the load history information;
   one or more BSS load percentile values over the averaging window.
20. The wireless device of item 16,
   wherein the BSS load information further comprises at least OBSS channel utilization information for a second BSS.
21. A method comprising one or more operations associated with basic service set (BSS) load information, as described herein.
22. A processor configured to perform operations associated with basic service set (BSS) load information, as described herein.
23. A method, comprising:
   by a first wireless device:
   receiving, from a second wireless device, basic service set (BSS) load information comprising overlapping BSS (OBSS) channel utilization information for one or more BSSs; and
   selecting a BSS with which to associate based at least in part on the OBSS channel utilization information.
24. The method of item 23,
   wherein the BSS load information further comprises in-BSS channel utilization information for the one or more BSSs,
   wherein selecting a BSS with which to associate is further based at least in part on the in-BSS channel utilization information.
25. The method of item 24,
   wherein the in-BSS channel utilization information comprises an indication of one or more of:
   in-BSS triggered utilization;
   in-BSS uplink enhanced distributed channel access (EDCA) utilization;
   in-BSS downlink utilization; or
   in-BSS transmit opportunity (TXOP) shared peer-to-peer (P2P) transmission utilization.
26. The method of item 23, wherein the method further comprises:
   receiving, from the second wireless device, a delivery traffic indication message (DTIM) beacon frame comprising the BSS load information.
27. The method of item 23, wherein the method further comprises:
   receiving, from the second wireless device, an ultra high reliability (UHR) beacon frame comprising the BSS load information.
28. The method of item 23, wherein the method further comprises:
   transmitting, to the second wireless device, a probe request frame; and
   receiving, from the second wireless device, a probe response frame comprising the BSS load information.
29. The method of item 23, wherein the method further comprises:
   transmitting, to the second wireless device, a BSS transition management (BTM) query frame; and
   receiving, from the second wireless device, a BTM request frame comprising the BSS load information.
30. The method of item 23,
   wherein the BSS load information further comprises load history information for the one or more BSSs.
31. The method of item 23,
   wherein the BSS load information is received on a first link, wherein the one or more BSSs comprise one or more of:
   a BSS provided by the second wireless device on the first link;
   a BSS provided by the second wireless device on a second link; or
   a BSS provided by a third wireless device on a third link.
32. A processor comprising memory configured to cause the processor to perform operations comprising:
   receiving basic service set (BSS) load information comprising overlapping BSS (OBSS) channel utilization information and in-BSS channel utilization information for a BSS.
33. The processor of item 32,
   wherein the in-BSS channel utilization information comprises an indication of one or more of:
   in-BSS triggered utilization for the BSS;
   in-BSS uplink enhanced distributed channel access (EDCA) utilization for the BSS;
   in-BSS downlink utilization for the BSS; or
   in-BSS transmit opportunity (TXOP) shared peer-to-peer (P2P) transmission utilization for the BSS.
34. The processor of item 32,
   wherein the BSS load information further comprises power save operation information for a wireless device that provides the BSS.
35. The processor of item 32,
   wherein the BSS load information further comprises cooperative BSS utilization information for the BSS.
36. The processor of item 32,
   wherein the BSS load information further comprises transmit opportunity duration distribution information for the BSS.
37. The processor of item 32, wherein the BSS load information further comprises load history information for the BSS, wherein the load history information indicates one or more percentile values over an averaging window for one or more of:
   in-BSS load;
   OBSS load;
   one or more BSS load element fields;
   one or more extended BSS load element fields; or
   one or more high efficiency (HE) BSS load element fields.
38. A wireless device, comprising:
   one or more antennas;
   a radio operably coupled to the one or more antennas; and
   a processor operably coupled to the radio;
   wherein the wireless device is configured to:
      provide basic service set (BSS) load information comprising at least overlapping BSS (OBSS) channel utilization information for the first BSS.
39. The wireless device of item 38,
   wherein the BSS load information further comprises information indicating one or more of:
   total in-BSS channel utilization for the first BSS.
   in-BSS triggered utilization for the first BSS;
   in-BSS uplink enhanced distributed channel access (EDCA) utilization for the first BSS;
   in-BSS downlink utilization for the first BSS;
   in-BSS transmit opportunity (TXOP) shared peer-to-peer (P2P) transmission utilization for the first BSS;
   a percent of time when the wireless device has BSS load measurement ongoing;
   a measurement start time for BSS load measurement by the wireless device;
   a percent of time when the wireless device is in power save operation;
   cooperative BSS utilization for the first BSS; or
   transmit opportunity duration distribution for the first BSS.
40. The wireless device of item 38,
   wherein the BSS load information is provided in one of:
   a broadcast beacon frame;
   a probe response frame; or
   a BSS transition management (BTM) request.
41. The wireless device of item 38,
   wherein the BSS load information further comprises load history information for the first BSS, wherein the load history information indicates one or more of:
   a number of BSS load samples included in the load history information;
   a duration of an averaging window for the load history information;
   one or more BSS load percentile values over the averaging window.
42. The wireless device of item 38,
   wherein the BSS load information further comprises at least OBSS channel utilization information for a second BSS.

Although the embodiments above have been described in considerable detail, numerous variations and modifications will become apparent to those skilled in the art once the above disclosure is fully appreciated. It is intended that the following claims be interpreted to embrace all such variations and modifications.

## Claims

1. A method, comprising:
by a first wireless device:
receiving, from a second wireless device, basic service set (BSS) load information comprising overlapping BSS (OBSS) channel utilization information for one or more BSSs; and
selecting a BSS with which to associate based at least in part on the OBSS channel utilization information.

2. The method of claim 1,
wherein the BSS load information further comprises in-BSS channel utilization information for the one or more BSSs,
wherein selecting a BSS with which to associate is further based at least in part on the in-BSS channel utilization information.

3. The method of claim 2,
wherein the in-BSS channel utilization information comprises an indication of one or more of:
in-BSS triggered utilization;
in-BSS uplink enhanced distributed channel access (EDCA) utilization;
in-BSS downlink utilization; or
in-BSS transmit opportunity (TXOP) shared peer-to-peer (P2P) transmission utilization.

4. The method of any of the preceding claims, wherein the BSS load information further comprises information indicating a percent of time when the first wireless device has BSS load measurement ongoing.

5. The method of any of the preceding claims, wherein the BSS load information further comprises information indicating a measurement start time for BSS load measurement by the first wireless device.

6. The method of any of the preceding claims, wherein the BSS load information is received in one or more of:
a delivery traffic indication message (DTIM) beacon frame;
an ultra high reliability (UHR) beacon frame;
a probe response frame; or
a BSS transition management (BTM) request frame.

7. The method of any of the preceding claims,
wherein the BSS load information further comprises load history information for the one or more BSSs, wherein the load history information indicates one or more of:
a number of BSS load samples included in the load history information;
a duration of an averaging window for the load history information;
one or more BSS load percentile values over the averaging window.

8. The method of any of the preceding claims,
wherein the BSS load information is received on a first link, wherein the one or more BSSs comprise one or more of:
a BSS provided by the second wireless device on the first link;
a BSS provided by the second wireless device on a second link; or
a BSS provided by a third wireless device on a third link.

9. A computer program comprising instructions for performing any of the methods of claims 1-8.

10. A processor comprising memory configured to cause the processor to perform operations comprising:
receiving basic service set (BSS) load information comprising overlapping BSS (OBSS) channel utilization information and in-BSS channel utilization information for a BSS.

11. The processor of claim 10,
wherein the in-BSS channel utilization information comprises an indication of one or more of:
in-BSS triggered utilization for the BSS;
in-BSS uplink enhanced distributed channel access (EDCA) utilization for the BSS;
in-BSS downlink utilization for the BSS; or
in-BSS transmit opportunity (TXOP) shared peer-to-peer (P2P) transmission utilization for the BSS.

12. The processor of any of claims 10-11,
wherein the BSS load information further comprises power save operation information for a wireless device that provides the BSS.

13. The processor of any of claims 10-12,
wherein the BSS load information further comprises cooperative BSS utilization information for the BSS.

14. The processor of any of claims 10-13,
wherein the BSS load information further comprises transmit opportunity duration distribution information for the BSS.

15. The processor of any of claims 10-14, wherein the BSS load information further comprises load history information for the BSS, wherein the load history information indicates one or more percentile values over an averaging window for one or more of:
in-BSS load;
OBSS load;
one or more BSS load element fields;
one or more extended BSS load element fields; or
one or more high efficiency (HE) BSS load element fields.
